# EUROPEAN PATENT SPECIFICATION

(11) **EP 3 585 020 B1**
(45) Date of publication and mention of the grant of the patent: **29.07.2026**
(21) Application number: 17896863.2
(22) Date of filing: 15.02.2017
(51) Int. Cl.: H04L 5/00, H04L 27/26, H04L 5/14

(54) **BASE STATION, TERMINAL, WIRELESS COMMUNICATION SYSTEM, AND WIRELESS COMMUNICATION METHOD**
BASISSTATION, ENDGERÄT, DRAHTLOSKOMMUNIKATIONSSYSTEM UND DRAHTLOSKOMMUNIKATIONSVERFAHREN
STATION DE BASE, TERMINAL, SYSTÈME DE COMMUNICATION SANS FIL, ET PROCÉDÉ DE COMMUNICATION SANS FIL

(43) Date of publication of application: 25.12.2019
(73) Proprietor: 1FINITY Inc., Kawasaki-shi, Kanagawa 211-8588 (JP)
(72) Inventor: HASEGAWA, Tsuyoshi, Kawasaki-shi Kanagawa 211-8588 (JP); SHIMOMURA, Tsuyoshi, Kawasaki-shi Kanagawa 211-8588 (JP)
(74) Representative: Haseltine Lake Kempner LLP
(86) International application number: PCT/JP2017/005586
(87) International publication number: WO 2018/150500

(56) References cited:
- EP-A1- 1 763 155
- US-A1- 2014 071 862
- US-A1- 2016 270 103
- US-A1- 2016 353 436
- US-B1- 7 336 626
- HUAWEI ET AL.: "Discussion on frame structure for NR", 3GPP TSG-RAN WG1#85 RL-164032, 15 May 2016 (2016-05-15), XP051089779
- TSUYOSHI HASEGAWA: "5G TDD Musen Hoshiki ni Muketa OFDM Symbol Bunkatsu Soshin Hoshiki no Kento", 2016 NEN IEICE COMMUNICATIONS SOCIETY CONFERENCE KOEN RONBUNSHU 1, vol. 1, 6 September 2016 (2016-09-06), pages 326, XP009515607
- KARTHIKEYAN GANESAN ET AL.: "A TDM Approach for Latencey Reduction of Ultra-Reliable Low- Latency Data in 5G", VEHICULAR NETWORKING CONFERENCE (VNC) , 2016 IEEE, 8 December 2016 (2016-12-08) - 10 December 2016 (2016-12-10), XP055535502
- TSUYOSHI SHIMOMURA ET AL.: "A novel transmission scheme of HARQ-Ack/Nack signal on unlicensed band in LAA", PROCEEDINGS OF THE IEICE GENERAL CONFERENCE 2016 NEN TSUSHIN (1, vol. 1, 1 March 2016 (2016-03-01), pages 461, XP009515606

## Description

### Field

The present invention relates to a base station, a terminal, a control method of the base station, and a control method of the terminal.

### Background Art

Fifth generation mobile communications (5G) is being considered as the next-generation communication standard. 5G is supposed to support many use cases broadly classified into enhanced mobile broadband (eMBB), massive machine type communications (Massive MTC), and ultra-reliable low latency communication (URLLC). 5G aims at improving the frequency utilization efficiency while simultaneously supporting ultra-low delay data in URLLC and ordinary data with the same interface. For example, eMBB aims at setting delay of user plane in uplink and downlink to 4 milliseconds. URLLC aims at setting delay of user plane in uplink and downlink to 0.5 milliseconds.

In addition, in recent years, a filtered orthogonal frequency division multiplexing (F-OFDM) technique has been presented. F-OFDM is an expanded technique of orthogonal frequency division multiplexing (OFDM) in which a plurality of subcarriers is multiplexed on a single carrier. In F-OFDM, signals with different symbol lengths and subcarrier spacing are multiplexed on a single carrier. This structure enables transmission of various types of data with different communication capacities and latency requirements altogether.

Citation List

### Non Patent Literature

Non Patent Literature 1: 3GPP RP-160671

Patent Literature 1: US 2016/353436 discloses a method of adaptive frame structure for time division duplex comprising: communicating, by a device, a first data transmission in a first time division duplexing (TDD) transmission time interval (TTI) in a first direction, the first TDD TTI being configured with a first frame structure configuration; and communicating, by the device, a second data transmission in the first TDD TTI in a second direction, one of the first direction and the second direction being a transmit direction, and the other of the first direction and the second direction being a receive direction.

Further, EP 1 763 155 A1 (SAMSUNG ELECTRONICS CO LTD [KR]) 14 March 2007 discloses the use of both TDD in the uplink and downlink, and FDD in the uplink to reduce the latency of ACK/NACK or similar feedback signalling.

### Summary

### Technical Problem

When ultra-low delay data with strict latency requirement is transmitted, response signals to reception of the ultra-low delay data, such as Ack (acknowledgement) and Nack (negative acknowledgement), are sent with short delay. For this reason, when ultra-low delay data is transmitted in time division duplex (TDD) in which the uplink signal and the downlink signal are switched in a time-division manner to perform communication, switching between the uplink signal and the downlink signal is performed for a short time period. By contrast, in transmission of data (hereinafter referred to as "ordinary data") with relatively moderate latency requirement, a response signal is sent as a reply to data of a relatively long time period to suppress overhead with switching between the uplink signal and the downlink signal. For this reason, switching between the uplink signal and the downlink signal is performed for a relatively long time period.

In TDD, when ultra-low delay data and ordinary data are multiplexed and transmitted by F-OFDM or the like, pieces of data with different latency requirements are multiplexed. However, when pieces of data with different latency requirements are multiplexed, transmission of data with strict latency requirement takes priority over transmission of data with moderate latency requirement. Because switching between the downlink signal and the uplink signal occurs in transmission of the response signal, when a response signal to data with strict latency requirement occurs, transmission of data with moderate latency requirement is postponed, and the transmission efficiency of data with moderate latency requirement deteriorates.

By contrast, when transmission of data with moderate latency requirement is continued until a group of data to which a response signal is to be sent as a reply, latency of a response signal transmitted for data with strict requirement for latency is prolonged. Accordingly, in TDD, when ultra-low delay data and ordinary data are multiplexed and transmitted by F-OFDM or the like, difficulty exists in improving the transmission efficiency while latency requirement in ultra-low delay data is satisfied.

The disclosed art has been conceived in light of the circumstances described above, and an object thereof is that transmission efficiency is improved while latency requirement in ultra-low delay data is satisfied.

### Solution to Problem

The invention is defined in the independent claims.

### Advantageous Effects of Invention

According to an embodiment, transmission efficiency is improved while latency requirement in ultra-low delay data is satisfied.

### Brief Description of Drawings

FIG. 1 is a diagram illustrating an example of a wireless communication system;
FIG. 2 is a block diagram illustrating an example of a base station in a first embodiment;
FIG. 3 is a diagram illustrating an example of a structure of a symbol included in a signal transmitted and received between the base station and a terminal in the first embodiment;
FIG. 4 is a diagram illustrating an example of a structure of a symbol included in a signal transmitted and received between the base station and the terminal in a comparative example;
FIG. 5 is a block diagram illustrating an example of the terminal in the first embodiment;
FIG. 6 is a flowchart illustrating an example of operations of the base station according to the first embodiment;
FIG. 7 is a flowchart illustrating an example of operations of the base station according to the first embodiment;
FIG. 8 is a flowchart illustrating an example of operations of the terminal according to the first embodiment;
FIG. 9 is a flowchart illustrating an example of operations of the terminal according to the first embodiment;
FIG. 10 is a diagram illustrating an example of a structure of a symbol included in a signal transmitted and received between the base station and the terminal according to a second embodiment;
FIG. 11 is a block diagram illustrating an example of the base station according to the second embodiment;
FIG. 12 is a block diagram illustrating an example of the terminal according to the second embodiment;
FIG. 13 is a diagram illustrating an example of a structure of a symbol included in a signal transmitted and received between the base station and the terminal according to a third embodiment;
FIG. 14 is a block diagram illustrating an example of the base station according to the third embodiment;
FIG. 15 is a block diagram illustrating an example of the terminal according to the third embodiment;
FIG. 16 is a diagram illustrating an example of a structure of a symbol included in a signal transmitted and received between the base station and the terminal according to a fourth embodiment;
FIG. 17 is a block diagram illustrating an example of the base station according to the fourth embodiment;
FIG. 18 is a diagram illustrating an example of resource to which the response signal is assigned in a fifth embodiment; and
FIG. 19 is a flowchart illustrating an example of operations of the base station according to the fifth embodiment.

### Description of Embodiments

Exemplary embodiments of the base station, the terminal, the wireless communication system, and the wireless communication method disclosed in the present application will be explained in detail below with reference to the accompanying drawings. It is to be noted that the embodiments below are not intended to limit the disclosed technology. Moreover, the embodiments can be combined appropriately without inconsistencies in processing contents.

### (first embodiment)

### [Wireless Communication System 10]

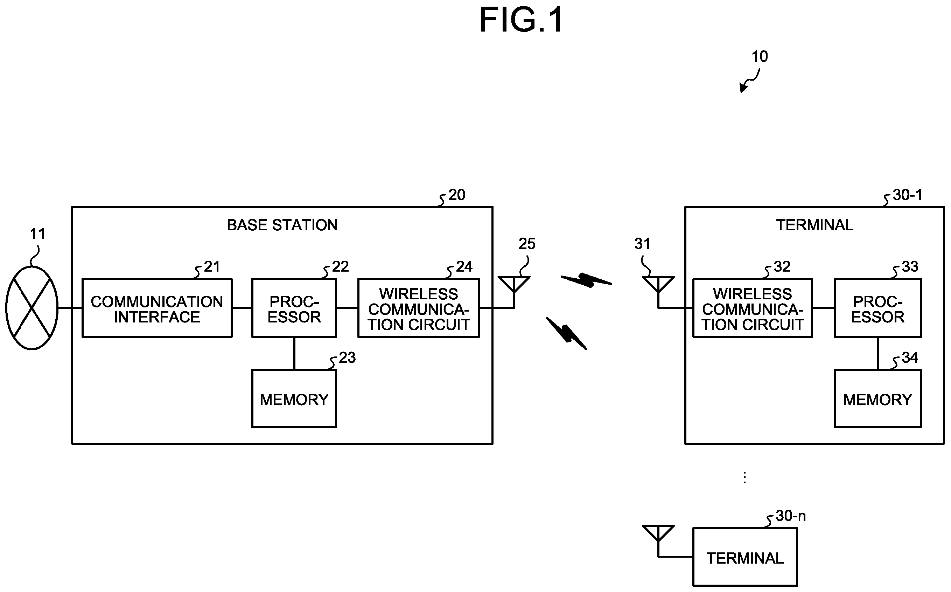

FIG. 1 is a diagram illustrating an example of a wireless communication system 10. The wireless communication system 10 includes a base station 20 and a plurality of terminals 30-1 to 30-n. The wireless communication system 10 in the present embodiment is a mobile communication system, such as Long Term Evolution (LTE). In the following explanation, when the terminals 30-1 to 30-n are collectively called without distinguishing them from each other, the terminals 30-1 to 30-n are simply referred to as terminals 30. The wireless communication system 10 may include a plurality of base stations 20. In the present embodiment, the base station 20 communicates with the terminals 30 using TDD in which the uplink signals and the downlink signals are switched in a time-division manner in a first frequency band F1 to perform communications.

The base station 20 includes a communication interface 21, a processor 22, a memory 23, a wireless communication circuit 24, and an antenna 25. The communication interface 21 is connected with a core network 11, receives data transmitted through the core network 11, and outputs the data to the processor 22. The communication interface 21 also outputs data output from the processor 22 to the core network 11.

The processor 22 includes, for example, a central processing unit (CPU), a field programmable gate array (FPGA), or a digital signal processor (DSP), or the like. The processor 22 generates a downlink signal to be transmitted to the terminals 30 on the basis of the data output from the communication interface 21, and outputs the generated downlink signal to the wireless communication circuit 24. In addition, when a response signal indicating that the downlink signal has not properly been received at the terminal 30 is output from the wireless communication circuit 24, the processor 22 outputs the downlink signal again to the wireless communication circuit 24. In this manner, the downlink signal that has not properly been received at the terminal 30 is transmitted again. The processor 22 also generates data to be transmitted to the core network 11 on the basis of the uplink signal output from the wireless communication circuit 24, and outputs the generated data to the communication interface 21.

The memory 23 includes, for example, a random access memory (RAM) or a read only memory (ROM), or the like, to store therein information used with the processor 22 to execute processing. The processor 22 executes predetermined processing using the information read from the memory 23.

The wireless communication circuit 24 performs processing, such as up-conversion to the frequency of the first frequency band F1, quadrature modulation, and amplification, on the downlink signal output from the processor 22. The wireless communication circuit 24 transmits the processed downlink signal in a wireless manner to the space through the antenna 25 in the downlink signal transmission period. The wireless communication circuit 24 also receives the uplink signal through the antenna 25 in the uplink signal transmission period at the first frequency band F1. The wireless communication circuit 24 performs processing, such as amplification, quadrature demodulation, and down-conversion, on the received uplink signal, and outputs the processed uplink signal to the processor 22.

Each of the terminals 30 includes an antenna 31, a wireless communication circuit 32, a processor 33, and a memory 34. The wireless communication circuit 32 performs processing, such as up-conversion to the first frequency band F1, quadrature modulation, and amplification, on the uplink signal output from the processor 33. The wireless communication circuit 32 transmits the processed uplink signal in a wireless manner to the space through the antenna 31 in the uplink signal transmission period. The wireless communication circuit 32 also receives the downlink signal through the antenna 31 in the downlink signal transmission period at the first frequency band F1. The wireless communication circuit 32 performs processing, such as amplification, quadrature demodulation, and down-conversion, on the received downlink signal, and outputs the processed downlink signal to the processor 33.

The wireless communication circuit 32 also performs processing, such as up-conversion to the frequency of a second frequency band F2, quadrature modulation, and amplification, on the response signal output from the processor 33. The wireless communication circuit 32 transmits the processed response signal in a wireless manner to the space through the antenna 31.

The processor 33 includes, for example, a CPU, a FPGA, or a DSP, or the like, and decodes received data from the downlink signal output from the wireless communication circuit 32. Thereafter, the processor 33 executes predetermined processing on the basis of the decoded received data. The processor 33 also performs encoding or the like on transmitted data generated by predetermined processing, to generate an uplink signal. The processor 33 outputs the generated uplink signal to the wireless communication circuit 32.

The processor 33 also generates a response signal indicating whether the downlink signal transmitted from the base station 20 has properly been received on the basis of a decoding result of the downlink signal output from the wireless communication circuit 32. Thereafter, the processor 33 outputs the generated response signal to the wireless communication circuit 32.

The memory 34 includes, for example, a RAM or a ROM, or the like, and stores therein a program and/or data and the like to achieve the functions with the processor 33. The processor 33 achieves the functions on the basis of the program and the like read from the memory 34.

### [Base Station 20]

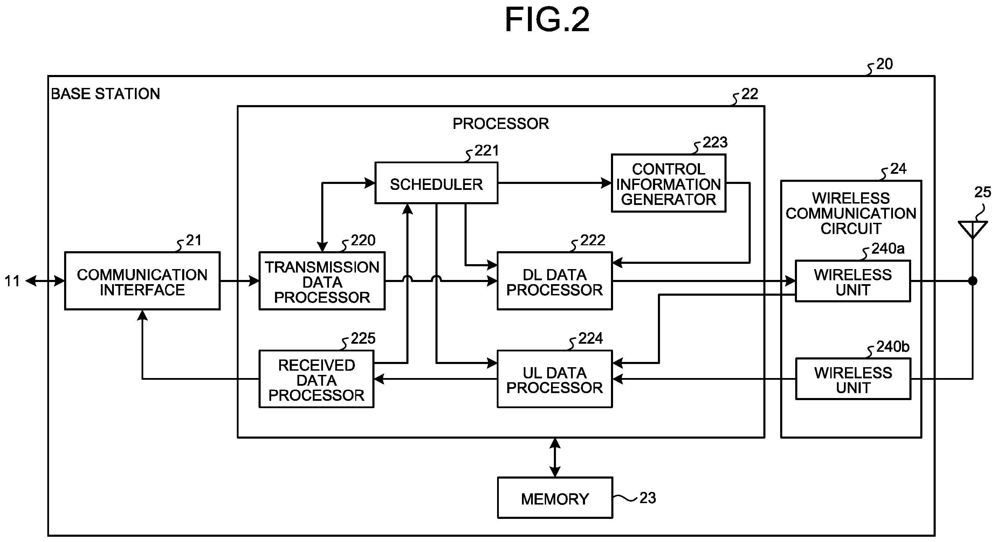

FIG. 2 is a block diagram illustrating an example of the base station 20 in the first embodiment. For example, as illustrated in FIG. 2, the base station 20 includes a transmission data processor 220, a scheduler 221, a down link (DL) data processor 222, a control information generator 223, an up link (UL) data processor 224, and a received data processor 225. Each of the functions of the transmission data processor 220, the scheduler 221, the DL data processor 222, the control information generator 223, the UL data processor 224, and the received data processor 225 is achieved by executing the program or the like read from the memory 23 with the processor 22. The wireless communication circuit 24 includes a wireless unit 240a and a wireless unit 240b. The wireless unit 240a is an example of a transmitter and a first receiver. The wireless unit 240b is an example of a second receiver.

The wireless unit 240a converts the downlink signal output from the processor 22 from the digital signal to an analog signal, and up-converts the converted downlink signal to the frequency of the first frequency band F1. Thereafter, the wireless unit 240a performs processing, such as quadrature modulation and amplification, on the up-converted downlink signal. Thereafter, the wireless unit 240a transmits the processed downlink signal to the space through the antenna 25 in the downlink signal transmission period. In addition, the wireless unit 240a performs processing, such as amplification, quadrature demodulation, and down-conversion, on the uplink signal received in the uplink signal transmission period through the antenna 25 at the first frequency band F1. Thereafter, the wireless unit 240a outputs the processed uplink signal to the processor 22.

The wireless unit 240b receives a response signal transmitted from the terminal 30 at the second frequency band F2 through the antenna 25, and performs processing, such as amplification, quadrature demodulation, and down-conversion, on the received response signal. Thereafter, the wireless unit 240b outputs the processed signal to the processor 22.

The transmission data processor 220 buffers the data, for each of types of the data, on the basis of the data output from the communication interface 21. The types of data include ultra-low delay data D1 with strict latency requirement, data D2 used for broadband communications, and data D3 with less data quantity than those of data D1 and data D2 but transmitted and received to and from a number of terminals 30, and the like. The ultra-low delay data D1 is data transmitted and received in, for example, URLLC. The data D2 used for broadband communications is data transmitted and received in, for example, eMBB. The data D3 transmitted and received to and from a number of terminals 30 is data transmitted and received in, for example, Massive MTC. The transmission data processor 220 notifies the scheduler 221 information of various types of buffered data. In the following explanation, the ultra-low delay data D1, the data D2 used for broadband communications, and the data D3 transmitted and received to and from a number of terminals 30 are also referred to as data D1, data D2, and data D3, respectively.

The transmission data processor 220 outputs the buffered data for each of the types to the DL data processor 222. The transmission data processor 220 also outputs the data of the type for which resending is instructed to the DL data processor 222, when resending is instructed from the scheduler 221. By contrast, when completion of transmission is notified from the scheduler 221, the transmission data processor 220 deletes the data, the transmission of which is completed, from the pieces of buffered data.

The scheduler 221 determines information to be used for generation of the downlink signal, for each type of data buffered with the transmission data processor 220. The information to be used for generation of the downlink signal includes information, such as modulation and coding scheme (MCS), the transmission power, the subcarrier spacing, and the symbol length. The scheduler 221 outputs the information, such as MCS determined, to the DL data processor 222 and the control information generator 223.

The scheduler 221 also determines the priority of data, for each type of data buffered with the transmission data processor 220. For example, the scheduler 221 determines the priority of data for each of types such that data with strict latency requirement has higher priority. In addition, the scheduler 221 determines the resource used for transmission of the response signal indicating Ack or Nack on the basis of the determined priority of data. The scheduler 221 outputs information of the resource of the response signal determined for each of types of data to the control information generator 223 and the UL data processor 224. The information of the resource of the response signal includes information, such as the frequency used for transmission of the response signal and the transmission timing of the response signal.

In the present embodiment, the response signal for data with high priority is transmitted at the frequency in the second frequency band F2 different from the first frequency band F1 used for transmission of the downlink signal and the uplink signal in TDD. By contrast, the response signal for data with low priority is transmitted in the uplink signal using the frequency in the first frequency band F1. Specifically, in the present embodiment, the response signal for the ultra-low delay data D1 is transmitted using the frequency in the second frequency band F2, and the response signals for the data D2 and the data D3 are transmitted using the frequency in the first frequency band F1. In the present embodiment, the response signal for data with highest priority is transmitted using the frequency in the second frequency band F2, and response signals for the other pieces of data are transmitted using the frequency in the first frequency band F1, but the disclosed technique is not limited thereto. For example, response signals for two or more pieces of data with higher priority may be transmitted at the frequency in the second frequency band F2.

In addition, the scheduler 221 notifies the DL data processor 222 of information of the transmission period of the downlink signal, and notifies the UL data processor 224 of information of the transmission period of the uplink signal. In addition, when the response signal is output from the received data processor 225 for each of types of data, the scheduler 221 determines which of Ack and Nack the response signal indicates. When the response signal output from the received data processor 225 indicates Ack, the scheduler 221 notifies the transmission data processor 220 that transmission is completed for data of the type corresponding to the response signal indicating Ack. By contrast, when the response signal output from the received data processor 225 indicates Nack, the scheduler 221 notifies the transmission data processor 220 to resend data of the type corresponding to the response signal indicating Nack.

The control information generator 223 generates control information including information, such as the resource of the response signal, determined by the scheduler 221 for each type of data. The control information generator 223 outputs the generated control information to the DL data processor 222. The control information generator 223 is an example of the second generator. The information designating the resource of the response signal is an example of the designation signal.

The DL data processor 222 performs OFDM modulation on the data output from the transmission data processor 220 and the control information output from the control information generator 223, for each type of data on the basis of MCS and the like output from the scheduler 221. In the present embodiment, the ultra-low delay data D1, the data D2, and the data D3 are modulated to OFDM signals with different subcarrier spacing and different symbol lengths. Thereafter, the DL data processor 222 filters and synthesizes the OFDM-modulated transmission signals for each of types of data to generate an F-OFDM signal. The F-OFDM signal is an example of the wireless signal. Thereafter, the DL data processor 222 outputs the generated F-OFDM signal to the wireless unit 240a in the transmission period of the downlink signal notified from the scheduler 221. The DL data processor 222 is an example of the first generator. The symbols corresponding to the respective pieces of data D1 to D3 are an example of a plurality of transmission signals with different symbol lengths.

The UL data processor 224 demodulates the uplink signal output from the wireless unit 240a, in the transmission period of the uplink signal notified from the scheduler 221. In the present embodiment, the uplink signals are F-OFDM signals. The UL data processor 224 filters the F-OFDM signals output from the wireless unit 240a for each of types of data, and demodulates the F-OFDM signals for each of types of data. Thereafter, the UL data processor 224 outputs the demodulated data to the received data processor 225 for each of types of data. In some types of data, the demodulated data may include a response signal.

In addition, the UL data processor 224 demodulates the response signal output from the wireless unit 240b in the predetermined period including the transmission timing of the response signal on the basis of the resource of the response signal notified from the scheduler 221. The UL data processor 224 outputs the demodulated response signal to the received data processor 225.

The received data processor 225 decodes the data output from the UL data processor 224 for each type of data. The received data processor 225 extracts user data from the decoded data, and outputs the extracted user data to the communication interface 21. When the decoded data includes a response signal, the received data processor 225 extracts the response signal from the decoded data, and outputs the extracted response signal to the scheduler 221. When a response signal is output from the UL data processor 224, the received data processor 225 outputs the response signal to the scheduler 221.

### [Symbol Structure]

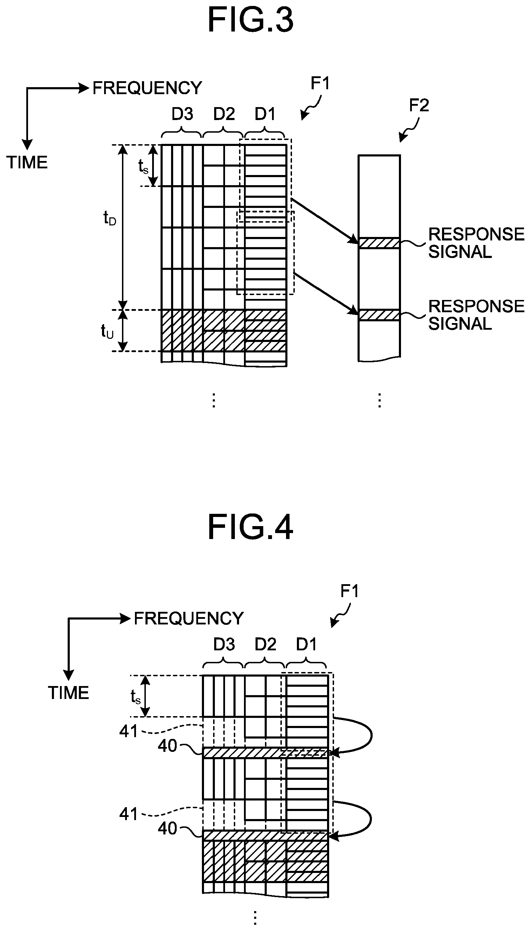

The following is an explanation of an example of a signal transmitted and received between the base station 20 and the terminals 30 in the present embodiment, with reference to FIG. 3. FIG. 3 is a diagram illustrating an example of the structure of the symbols included in the signal transmitted and received between the base station 20 and the terminals 30 in the first embodiment. The left part of FIG. 3 illustrates an F-OFDM signal transmitted and received in the first frequency band F1. In the present embodiment, the uplink signal and the down link signal are switched in a time-division manner, in the first frequency band F1. In the F-OFDM signal illustrated in FIG. 3, the boxes indicate the resources of the symbols of the transmission signal transmitted at respective timings. Specifically, in the F-OFDM signal illustrated in FIG. 3, the length in the time axis direction in each of the boxes indicates the symbol length, and the length in the frequency axis direction in each of the boxes indicates the subcarrier spacing.

In the F-OFDM signal in the present embodiment, the ultra-low delay data D1, the data D2 used for broadband communications, and the data D3 transmitted and received to and from a number of terminals 30 are multiplexed. In the present embodiment, for example, the symbol length of the data D3 is a length equal to the period tₛ of a single slot, as illustrated in FIG. 3. The symbol length of the data D2 is half the symbol length of the data D3, and the subcarrier spacing of the data D2 is twice the subcarrier spacing of the data D3. The symbol length of the ultra-low delay data D1 is half the symbol length of the data D2, and the subcarrier spacing of the ultra-low delay data D1 is twice the subcarrier spacing of the data D2. In the present embodiment, the symbol length of each type of data is equal to the sum total of the effective symbol length and the cyclic prefix (CP) length.

In FIG. 3, a white box indicates a symbol of the downlink signal transmitted from the base station 20 to the terminal 30, and a hatched box indicates a symbol of the uplink signal transmitted from the terminal 30 to the base station 20. Specifically, in the first frequency band F1, the downlink signal is transmitted from the base station 20 to the terminal 30 in the transmission period t_{D} of the downlink signal, and the uplink signal is transmitted from the terminal 30 to the base station 20 in the transmission period t_{U} of the uplink signal. In addition, in the second frequency band F2, the response signal is transmitted from the terminal 30 to the base station 20.

In the present embodiment, a response signal for a predetermined number of symbols for the ultra-low delay data D1 is transmitted using the frequency in the second frequency band F2, for example, as illustrated in the right part in FIG. 3. In the example of FIG. 3, a single response signal for each group of seven symbols of the ultra-low delay data D1 is transmitted from the terminal 30 to the base station 20 in the second frequency band F2. Because the data D2 and the data D3 have more moderate latency requirements than the ultra-low delay data D1, response signals for the data D2 and the data D3 are transmitted from the terminal 30 to the base station 20 in the transmission period t_{U} in the first frequency band F1. In the present embodiment, the bandwidth of the first frequency band F1 is broader than the bandwidth of the second frequency band F2.

Supposing that all the response signals of the data D1 and D2 are transmitted in the first frequency band F1, for example, the signal transmission direction is switched from the downlink signal to the uplink signal at a transmission timing 40 of the response signal for the ultra-low delay data D1 with strict latency requirement, as illustrated in FIG. 4. FIG. 4 is a diagram illustrating an example of the structure of the symbols included in the signal transmitted and received between the base station 20 and the terminal 30 in a comparative example.

In the comparative example illustrated in FIG. 4, the slot including the transmission timing 40 of the response signal of the ultra-low delay data D1 has no sufficient downlink signal period to arrange the symbols of the data D3. In the same manner, in the comparative example illustrated in FIG. 4, the slot including the transmission timing 40 of the response signal of the ultra-low delay data D1 has no sufficient downlink signal period to arrange the two symbols of the data D2 in the time axis direction. For this reason, transmission of the symbols of the data D2 and the data D3 that have not been arranged in the slot including the transmission timing 40 of the response signal of the ultra-low delay data D1 is postponed to the next downlink signal slot. In this manner, for example, as illustrated in FIG. 4, null data or the like that does not contribute to data transmission is arranged in regions 41 illustrated with broken lines in the slots. This reduces the transmission efficiency of the data D2 and the data D3.

By contrast, in the wireless communication system 10 according to the present embodiment, as illustrated in FIG. 3, a response signal for at least any of a plurality of transmission signals included in the F-OFDM signal is transmitted in the second frequency band F2 different from the first frequency band F1. In particular, a response signal for a transmission signal with the strictest latency requirement, that is, with the smallest permissible range for delay, among a plurality of transmission signals included in the F-OFDM signal is transmitted in the second frequency band F2. This structure enables arrangement of more pieces of data D1 to D3 in each of slots, as illustrated in FIG. 3. This structure improves the data transmission efficiency, while satisfying the latency requirement in the ultra-low delay data D1.

### [Terminals 30]

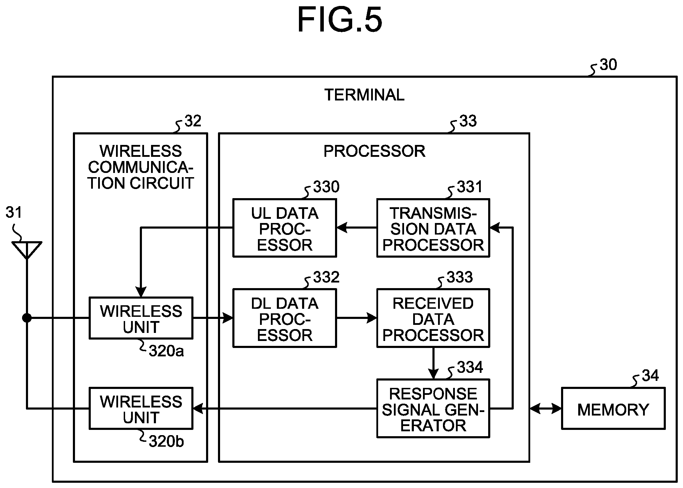

FIG. 5 is a block diagram illustrating an example of the terminal 30 according to the first embodiment. As illustrated in FIG. 5, for example, each of the terminals 30 includes a UL data processor 330, a transmission data processor 331, a DL data processor 332, a received data processor 333, and a response signal generator 334. The functions of the UL data processor 330, the transmission data processor 331, the DL data processor 332, the received data processor 333, and the response signal generator 334 are achieved by executing a program or the like read from the memory 34 with the processor 33. The wireless communication circuit 32 includes a wireless unit 320a and a wireless unit 320b.

The wireless unit 320a converts the uplink signal output from the processor 33 from the digital signal to the analog signal, and up-converts the converted uplink signal to the frequency of the first frequency band F1. The wireless unit 320a also performs processing, such as quadrature modulation and amplification, on the up-converted uplink signal. Thereafter, the wireless unit 320a transmits the processed uplink signal in a wireless manner to the space through the antenna 31 in the transmission period of the uplink signal. The wireless unit 320a also receives the downlink signal through the antenna 31 in the transmission period of the downlink signal in the first frequency band F1. The wireless unit 320a also performs processing, such as amplification, quadrature demodulation, and down-conversion, on the received downlink signal, and outputs the processed downlink signal to the processor 33. The wireless unit 320a is an example of the first transmitter and the receiver.

The wireless unit 320b converts the response signal output from the processor 33 from the digital signal to the analog signal, and up-converts the converted signal to the frequency of the second frequency band F2. The wireless unit 320b performs processing, such as quadrature modulation and amplification, on the up-converted response signal. Thereafter, the wireless unit 320b transmits the processed response signal in a wireless manner to the space through the antenna 31 at the timing designated as the transmission timing of the response signal. The wireless unit 320b is an example of the second transmitter.

The transmission data processor 331 performs processing, such as encoding, on data, for each type of data generated with an application processor (not illustrated), and outputs the processed data to the UL data processor 330. When a response signal is output from the response signal generator 334, the transmission data processor 331 also performs processing, such as encoding, on the response signal, and outputs the processed response signal to the UL data processor 330.

The UL data processor 330 performs OFDM modulation on the data and the response signal output from the transmission data processor 331, and filters and synthesizes the modulated data for each of the types, to generate an F-OFDM signal. The UL data processor 330 outputs the generated F-OFDM signal to the wireless unit 320a, in the transmission period of the uplink signal.

The DL data processor 332 filters the F-OFDM signal serving as the downlink signal output from the wireless unit 320a for each type of data, in the transmission period of the downlink signal. Thereafter, the DL data processor 332 demodulates the filtered transmission signal for each type of data, and outputs the demodulated data to the received data processor 333. The demodulated data includes control information including information indicating the resource of the response signal and the transmission timing and the like.

The received data processor 333 separates the user data and the control information from the data output from the DL data processor 332 for each type of data. Thereafter, the received data processor 333 tries to decode the user data, and determines whether reception of the user data has succeeded. When decoding of the user data has succeeded, the received data processor 333 determines that reception of the user data has succeeded. When decoding of the user data has ended in failure, the received data processor 333 determines that reception of the user data has ended in failure.

Thereafter, the received data processor 333 outputs a determination result relating to reception of the user data and the control information to the response signal generator 334, for each type of data. The received data processor 333 also outputs the user data, reception of which has been determined to be successful, to the application processor (not illustrated).

The response signal generator 334 generates a response signal corresponding to the determination result, for each type of data on the basis of the determination result output from the received data processor 333. Specifically, the response signal generator 334 generates a response signal indicating Ack, when the determination result obtained with the received data processor 333 indicates success in reception of the user data. By contrast, the response signal generator 334 generates a response signal indicating Nack, when the determination result obtained with the received data processor 333 indicates failure in reception of the user data. Thereafter, the response signal generator 334 refers to the control information output from the received data processor 333 for each type of data, and outputs the response signal for which the first frequency band F1 is designated as the resource to the transmission data processor 331. The response signal generator 334 also outputs the response signal for which the second frequency band F2 is designated as the resource to the wireless unit 320b.

### [Operations of Base Station 20]

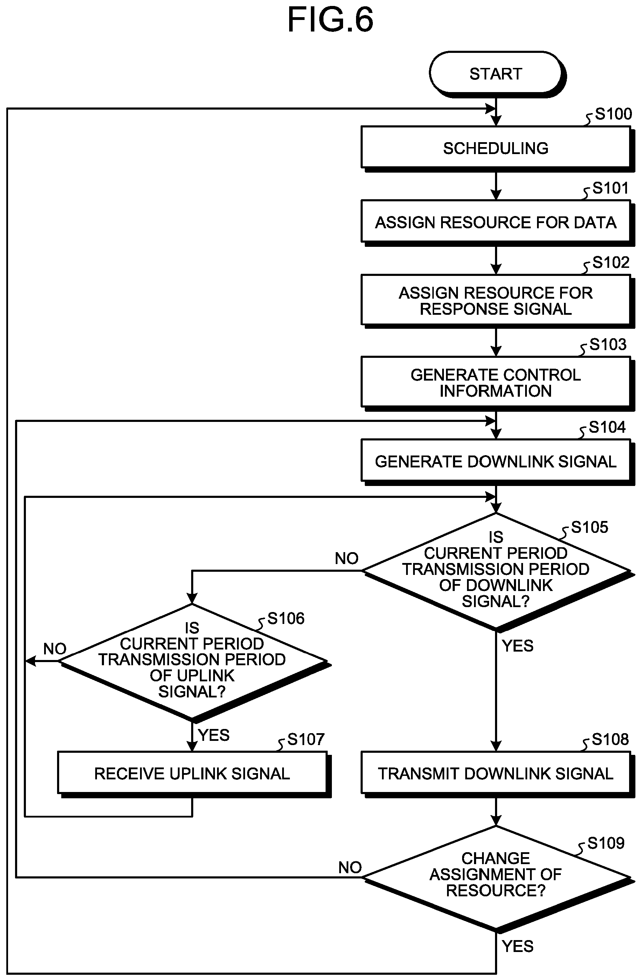

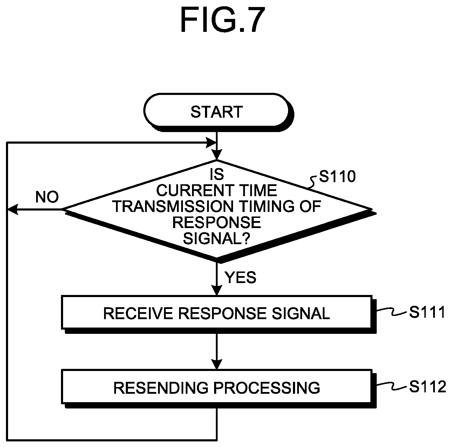

FIG. 6 and FIG. 7 are flowcharts illustrating examples of operations of the base station 20 according to the first embodiment. FIG. 6 mainly illustrates an example of operations of the base station 20 relating to transmission and reception of the uplink signal and the downlink signal in the first frequency band F1, and FIG. 7 illustrates an example of operations of the base station 20 relating to reception of the response signal and resending processing.

First, the scheduler 221 performs scheduling to determine the priority of data for each type of data transmitted with the downlink signal in the first frequency band F1 (S100). Thereafter, the scheduler 221 assigns the resource for data for each type of data, in the order of priority, highest first (S101). At Step S101, information such as the frequency resource and MCS, used for generation of the downlink signal are determined for each type of data. The information of resource and MCS and the like determined for each type of data are output to the DL data processor 222.

Thereafter, the scheduler 221 assigns the resource for the response signal for each type of data in the order of priority, highest first (S102). In the present embodiment, the scheduler 221 assigns the resource for the response signal to the second frequency band F2, for data (for example, the ultra-low delay data D1) with the highest priority. By contrast, the scheduler 221 assigns the resource for the response signal to the first frequency band F1, for data (for example, the data D2 and the data D3) other than the data with the highest priority.

Thereafter, the control information generator 223 generates control information including the resource for the response signal and the resource for data determined for each type of data with the scheduler 221 (S103). Thereafter, the control information generator 223 outputs the generated control information to the DL data processor 222.

Thereafter, the DL data processor 222 performs OFDM modulation on the data output from the transmission data processor 220 and the control information output from the control information generator 223, for each type of data, on the basis of the MCS and the like output from the scheduler 221. The DL data processor 222 filters and synthesizes the OFDM-modulated transmission signals for each of the types, to generate an F-OFDM signal as the downlink signal (S104).

Thereafter, the DL data processor 222 determines whether the current period is the transmission period of the downlink signal (S105). When the current period is not the transmission period of the downlink signal (No at S105), the UL data processor 224 determines whether the current period is the transmission period of the uplink signal (S106). When the current period is not the transmission period of the uplink signal (No at S106), the DL data processor 222 executes the processing illustrated at Step S105 again.

By contrast, when the current period is the transmission period of the uplink signal (Yes at S106), the UL data processor 224 receives the uplink signal output from the wireless unit 240a, and demodulates the received uplink signal (S107). The received data processor 225 decodes the data demodulated with the UL data processor 224, outputs the user data included in the decoded data to the communication interface 21, and outputs the response signal included in the decoded data to the scheduler 221. Thereafter, the DL data processor 222 executes the processing illustrated at Step S105 again.

By contrast, when the current period is the transmission period of the downlink signal (Yes at S105), the DL data processor 222 outputs the F-OFDM signal generated at Step S104 as the downlink signal to the wireless unit 240a. The wireless unit 240a up-converts the downlink signal output from the DL data processor 222 to the frequency of the first frequency band F1. The wireless unit 240a performs processing, such as quadrature modulation and amplification, on the up-converted downlink signal, and transmits the processed downlink signal in a wireless manner to the space through the antenna 25 (S108).

Thereafter, the scheduler 221 determines whether to change the assignment of the resource of the types of data in the downlink signal on the basis of the data buffered in the transmission data processor 220 (S109). For example, there are cases where assignment of the resource of the types of data is changed due to increase or decrease in types of data. When the assignment of the resource is not changed (No at S109), the DL data processor 222 executes the processing illustrated at Step S104 again. By contrast, when the assignment of the resource is changed (Yes at S109), the scheduler 221 executes the processing illustrated at Step S100 again.

The following is an explanation of operations of the base station 20 relating to reception of the response signal and resending processing with reference to FIG. 7.

First, the UL data processor 224 determines whether the current time is the transmission timing of the response signal on the basis of the information of the resource for the response signal output from the scheduler 221 (S110). When the current time is not the transmission timing of the response signal (No at S110), the UL data processor 224 executes the processing illustrated at Step S110 again. By contrast, when the current time is the transmission timing of the response signal (Yes at S110), the UL data processor 224 receives the response signal output from the wireless unit 240b in the predetermined period including the transmission timing of the response signal (S111). Thereafter, the UL data processor 224 demodulates the received response signal and outputs the demodulated response signal to the received data processor 225.

Thereafter, the received data processor 225 outputs the response signal demodulated with the UL data processor 224 to the scheduler 221. The transmission data processor 220 and the scheduler 221 execute resending processing (S112). Thereafter, the UL data processor 224 executes the processing illustrated at Step S110 again. In the resending processing, when the response signal indicates Nack, the scheduler 221 instructs the transmission data processor 220 to resend data corresponding to the response signal. The transmission data processor 220 resends the data instructed with the scheduler 221. By contrast, when the response signal indicates Ack, the scheduler 221 notifies the transmission data processor 220 of completion of transmission of data corresponding to the response signal. The transmission data processor 220 deletes the data, the completion of transmission of which has been notified from the scheduler 221, from the buffered data.

### [Operations of Terminals 30]

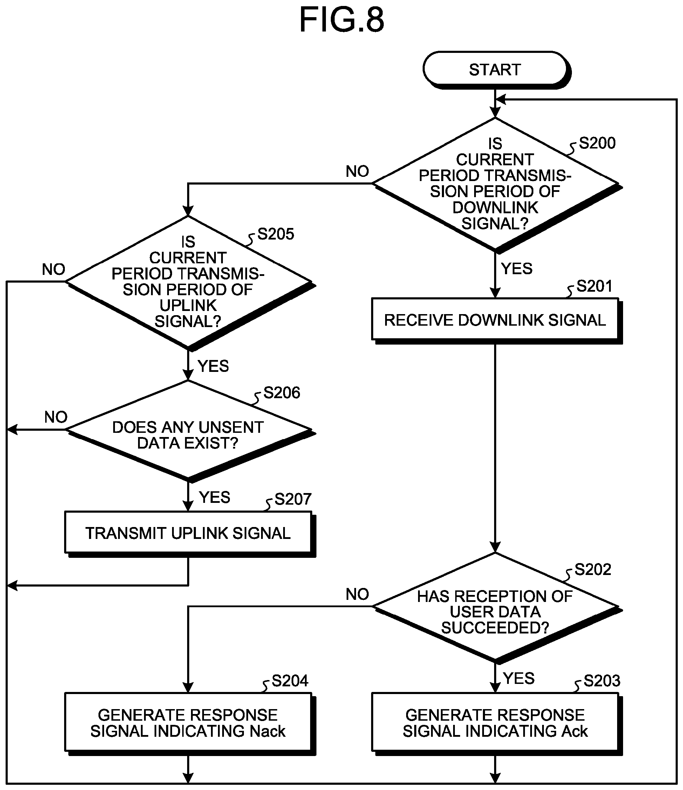

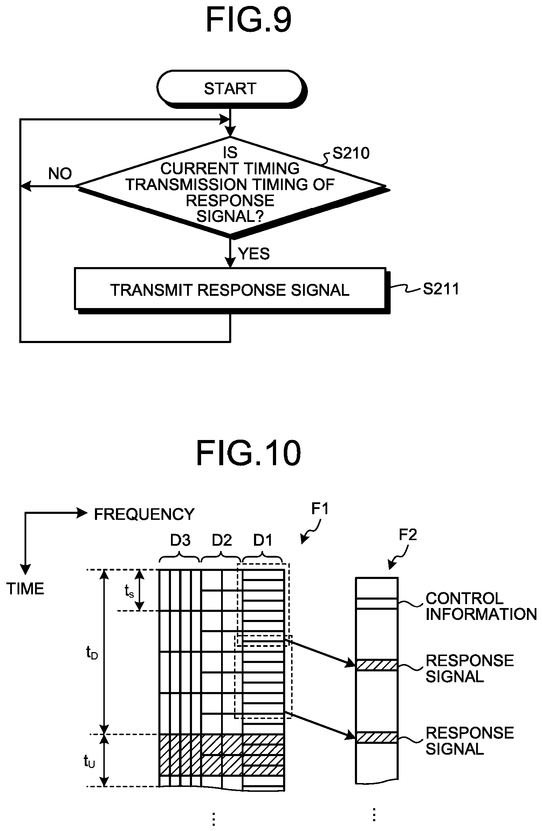

FIG. 8 and FIG. 9 are flowcharts illustrating examples of operations of each of the terminals 30 in the first embodiment. FIG. 8 mainly illustrates an example of operations of each of the terminals 30 relating to transmission and reception of the uplink signal and the downlink signal in the first frequency band F1, and FIG. 9 illustrates an example of operations of each of the terminals 30 relating to transmission of the response signal.

First, the DL data processor 332 determines whether the current period is the transmission period of the downlink signal (S200). When the current period is the transmission period of the downlink signal (Yes at S200), the DL data processor 332 receives an F-OFDM signal serving as the downlink signal output from the wireless unit 320a (S201). The DL data processor 332 filters the received F-OFDM signal for each type of data. Thereafter, the DL data processor 332 demodulates the filtered transmission signal for each type of data, and outputs the demodulated data to the received data processor 333.

Thereafter, the received data processor 333 tries to decode user data included in the data output from the DL data processor 332 for each type of data, and determines whether reception of the user data has succeeded (S202). When the received data processor 333 determines that reception of the user data has succeeded (Yes at S202), the response signal generator 334 generates a response signal indicating Ack (S203). By contrast, when the received data processor 333 determines that reception of the user data has ended in failure (No at S202), the response signal generator 334 generates a response signal indicating Nack (S204). The response signal for which the first frequency band F1 is designated as the resource is output to the transmission data processor 331, and subjected to processing, such as encoding, with the transmission data processor 331. The processed response signal is modulated to an F-OFDM signal with the UL data processor 330, and transmitted from the wireless unit 320a. Thereafter, the processing illustrated at Step S200 is executed again.

By contrast, when the current period is not the transmission period of the downlink signal (No at S200), the transmission data processor 331 determines whether the current period is the transmission period of the uplink signal (S205). When the current period is not the transmission period of the uplink signal (No at S205), the processing illustrated at Step S200 is executed again.

By contrast, when the current period is the transmission period of the uplink signal (Yes at S205), the transmission data processor 331 determines whether at least one of unsent data and a response signal exists (S206). When neither unsent data nor response signal exists (No at S206), the processing illustrated at Step S200 is executed again.

By contrast, when at least one of unsent data and a response signal exists (Yes at S206), the transmission data processor 331 performs processing, such as encoding, on the unsent data or response signal, for each type of data. The transmission data processor 331 outputs the processed data or response signal to the UL data processor 330. The data or response signal having been subjected to encoding or the like with the transmission data processor 331 is modulated to an F-OFDM signal with the UL data processor 330, and transmitted as the uplink signal from the wireless unit 320a in the first frequency band F1 (S207). Thereafter, the processing illustrated at Step S200 is executed again.

The following is an explanation of operations of the terminal 30 relating to transmission of the response signal with reference to FIG. 9.

First, the received data processor 333 decodes the downlink signal received in the transmission period of the downlink signal, and outputs a determination result relating to reception of user data together with the control information including information, such as the resource of the response signal, to the response signal generator 334. The response signal generator 334 specifies the transmission timing of the response signal assigned to the resource of the second frequency band F2 on the basis of the control information output from the received data processor 333. The response signal generator 334 determines whether the current timing is the transmission timing of the response signal (S210).

When the current timing is the transmission timing of the response signal (Yes at S210), the response signal generator 334 outputs the response signal assigned to the resource of the second frequency band F2 to the wireless unit 320b. The wireless unit 320b performs processing, such as up-conversion to the frequency of the second frequency band F2, quadrature modulation, and amplification, on the response signal output from the response signal generator 334. Thereafter, the wireless unit 320b transmits the processed signal in a wireless manner to the space through the antenna 31 (S211). Thereafter, the processing illustrated at Step S210 is executed again.

### [Effects of First Embodiment]

As described above, the wireless communication system 10 according to the present embodiment includes the base station 20 and the terminals 30, each of which switches the uplink signal and the downlink signal in a time-division manner to communicate with the base station 20. The base station 20 includes the DL data processor 222, the wireless unit 240a, and the wireless unit 240b. The DL data processor 222 generates an F-OFDM signal including a plurality of transmission signals having different symbol lengths. The wireless unit 240a transmits the F-OFDM signal to the terminals 30 at the transmission timing of the downlink signal in the first frequency band F1. The wireless unit 240a also receives the uplink signal transmitted from each of the terminals 30 at the transmission timing of the uplink signal in the first frequency band F1. The wireless unit 240b receives a response signal corresponding to at least one transmission signal, out of response signals indicating whether the respective transmission signals included in the F-OFDM signal have been properly received at the terminal 30, in the second frequency band F2 different from the first frequency band F1. Each of the terminals 30 includes the wireless unit 320a, the wireless unit 320b, the received data processor 333, and the response signal generator 334. The wireless unit 320a transmits the uplink signal in the transmission period of the uplink signal to the base station 20 in the first frequency band F1. The wireless unit 320a also receives the F-OFDM signal transmitted from the base station 20 in the transmission period of the downlink signal in the first frequency band F1. The received data processor 333 extracts data included in the transmission signal addressed to the terminal itself from the F-OFDM signal. The response signal generator 334 generates a response signal on the basis of the data extracted with the received data processor 333. The wireless unit 320b transmits the generated response signal to the base station 20 in the second frequency band F2. This structure enables the wireless communication system 10 to improve the transmission efficiency while satisfying the latency requirement in the ultra-low delay data.

In addition, in the present embodiment, each of the base stations 20 includes the control information generator 223 generating control information including information designating the second frequency band F2 as the frequency band in which a response signal corresponding to at least one of the transmission signals included in the F-OFDM signal is transmitted. The wireless unit 240a transmits the control information generated with the control information generator 223 to the terminal 30 in the first frequency band F1. This structure enables the terminal 30 to specify the response signal to be transmitted in the second frequency band F2.

In the present embodiment, the control information generator 223 generates control information designating the second frequency band F2 as the frequency band used for transmission of the response signal for a transmission signal to transmit data transmitted with lower delay than data transmitted with other transmission signals, out of the transmission signals included in the F-OFDM signal. This structure enables the wireless communication system 10 to improve the transmission efficiency while satisfying the latency requirement in ultra-low delay data.

In addition, in the present embodiment, the first frequency band F1 is broader than the second frequency band F2. This structure enables arrangement of the resource of the response signal in the second frequency band F2, thereby maintaining high transmission efficiency of the first frequency band F1 and maintaining high transmission efficiency of the whole system.

### (Second Embodiment)

In the first embodiment, control information including information, such as the resource of the response signal, is transmitted from the base station 20 to the terminals 30 in the downlink signal in the first frequency band F1. By contrast, the second embodiment is different from the first embodiment in that control information including information of the resource of the response signal, and the like, is transmitted from the base station 20 to the terminals 30 in the second frequency band F2, as illustrated in FIG. 10. FIG. 10 is a diagram illustrating an example of the structure of symbols included in a signal transmitted and received between the base station 20 and the terminals 30 in the second embodiment. For example, as illustrated in FIG. 10, in the second frequency band F2, control information is transmitted from the base station 20 to each of the terminals 30, and a response signal is transmitted from each of the terminals 30 to the base station 20. By contrast, in the first frequency band F1, an F-OFDM signal including a plurality of transmission signals is transmitted and received between the base station 20 and the terminals 30. This structure enables use of more resources in the first frequency band F1 for transmission and reception of data between the base station 20 and the terminals 30, and enhances the data transmission efficiency.

### [Base Station 20]

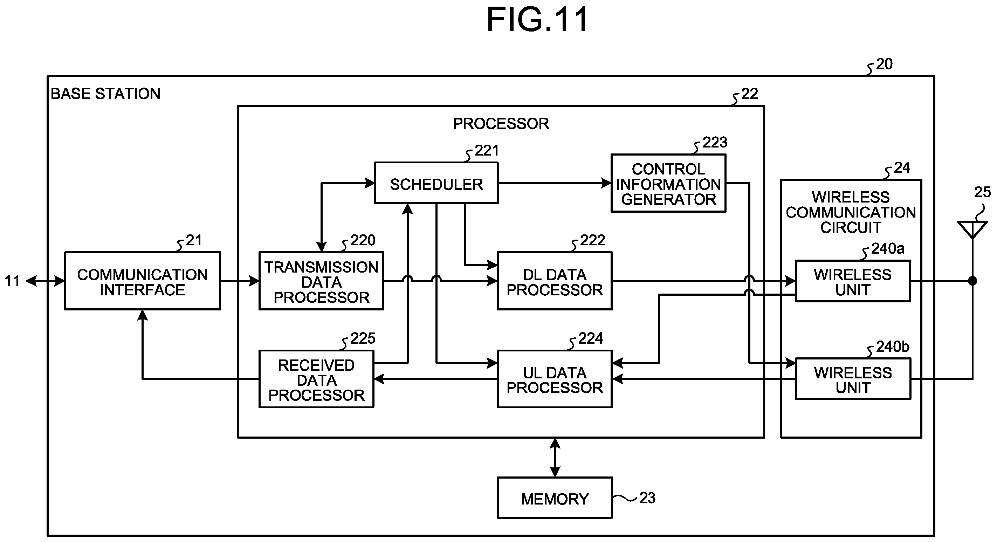

FIG. 11 is a block diagram illustrating an example of the base station 20 in the second embodiment. In FIG. 11, except for the points described hereinafter, the blocks with the same reference numerals as those in FIG. 2 are equal to the blocks explained with reference to FIG. 2, and a detailed explanation thereof is omitted.

The scheduler 221 determines the transmission timing of control information. The control information generator 223 generates control information including information, such as the resource of the response signal and MCS, determined for each of type of data with the scheduler 221, and outputs the generated control information to the wireless unit 240b at the transmission timing determined with the scheduler 221.

The wireless unit 240b converts the control information output from the control information generator 223 from the digital signal to the analog signal, and up-converts the converted control information to the second frequency band F2. The wireless unit 240b performs processing, such as quadrature modulation and amplification, on the up-converted control information. Thereafter, the wireless unit 240b transmits the processed control information in a wireless manner to the space through the antenna 25 at the transmission timing determined with the scheduler 221.

### [Terminals 30]

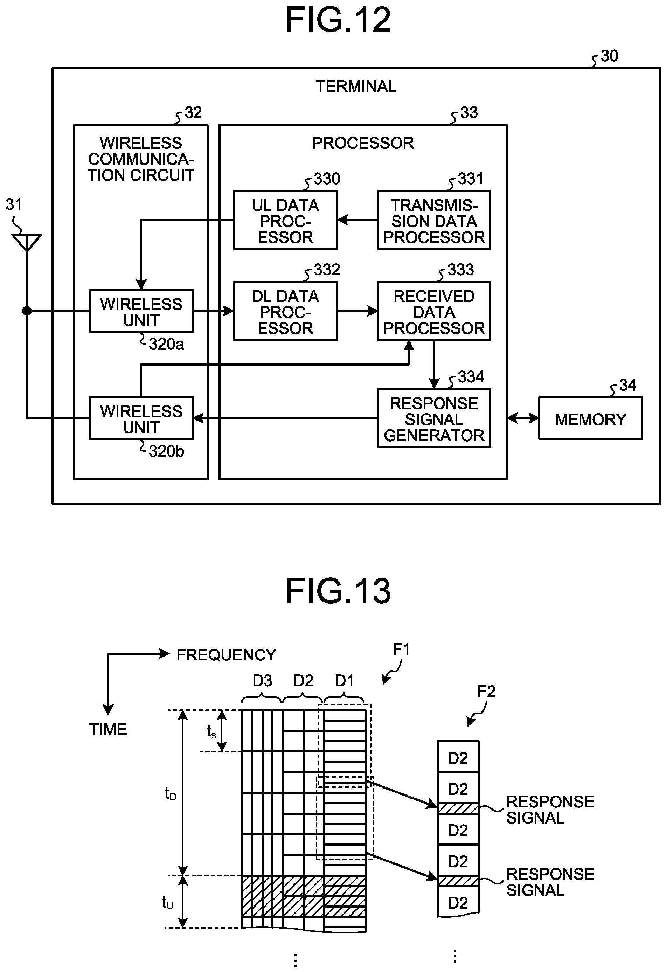

FIG. 12 is a block diagram illustrating an example of each of the terminals 30 in the second embodiment. In FIG. 12, except for the points described hereinafter, the blocks with the same reference numerals as those in FIG. 5 are equal to the blocks explained with reference to FIG. 5, and a detailed explanation thereof is omitted.

The received data processor 333 extracts user data from data output from the DL data processor 332 for each type of data, and tries to decode the extracted user data. The received data processor 333 determines whether reception of the user data has succeeded. The received data processor 333 also extracts control information from the signal output from the wireless unit 320b. Thereafter, the received data processor 333 outputs a determination result relating to reception of the user data and the control information for each type of data to the response signal generator 334.

### [Effects of Second Embodiment]

As described above, the wireless unit 240b according to the present embodiment transmits control information generated with the control information generator 223 to the terminal 30 in the second frequency band F2. This structure enables use of more resources in the first frequency band F1 for transmission and reception of data between the base station 20 and the terminals 30, and enhances the data transmission efficiency.

### (Third Embodiment)

In the first embodiment, the data D1 to D3 are transmitted from the base station 20 to the terminals 30 in the first frequency band F1. By contrast, the third embodiment is different from the first embodiment in that the resource of at least one of the data D1 to D3 is assigned to both the first frequency band F1 and the second frequency band F2, as illustrated in FIG. 13. FIG. 13 is a diagram illustrating an example of the structure of symbols included in a signal transmitted and received between the base station 20 and the terminals 30 in the third embodiment. In the example illustrated in FIG. 13, the resource of the data D2 is assigned to both the first frequency band F1 and the second frequency band F2. By contrast, the resource of the data D1 and the resource of the data D3 are assigned to the first frequency band F1, and not assigned to the second frequency band F2. As described above, in the present embodiment, the data D2 is transmitted from each of the terminals 30 to the base station 20 using the resource of the first frequency band F1 and the second frequency band F2. This structure enables transmission of broadband data, such as the data D2, with higher efficiency.

### [Base Station 20]

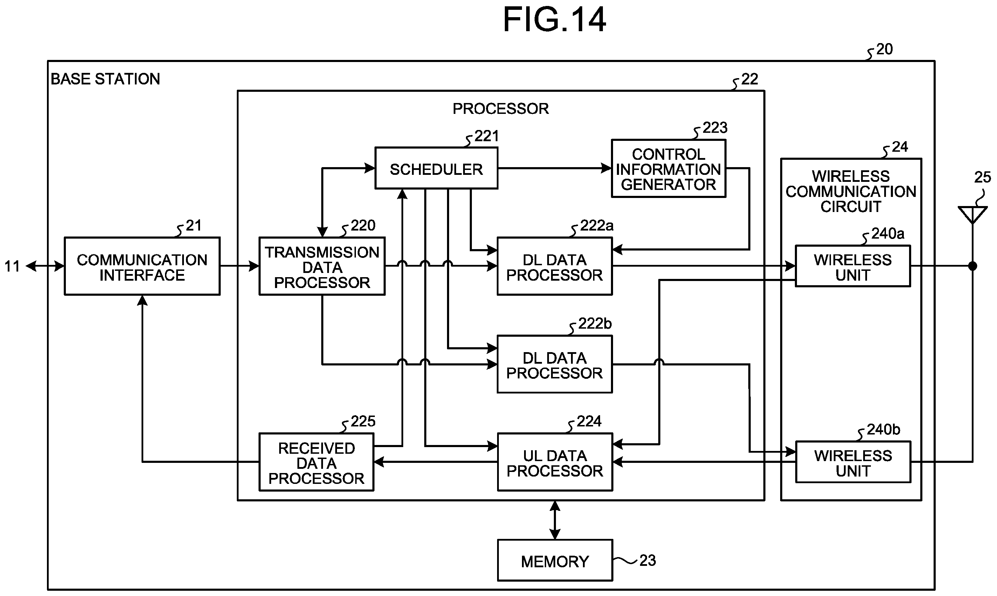

FIG. 14 is a block diagram illustrating an example of the base station 20 according to the third embodiment. As illustrated in FIG. 14, the base station 20 according to the present embodiment includes the transmission data processor 220, the scheduler 221, a DL data processor 222a, a DL data processor 222b, the control information generator 223, the UL data processor 224, and the received data processor 225. In FIG. 14, except for the points described hereinafter, the blocks with the same reference numerals as those in FIG. 2 are equal to the blocks explained with reference to FIG. 2, and a detailed explanation thereof is omitted.

The scheduler 221 determines information to be used for generation of the downlink signal, for each type of data buffered with the transmission data processor 220. The information to be used for generation of the downlink signal includes information of the frequency resource used for transmission of the downlink signal. In the present embodiment, for example, the scheduler 221 assigns the resource of the ultra-low delay data D1 and the resource of the data D3 to the first frequency band F1, and assigns the resource of the data D2 to both the first frequency band F1 and the second frequency band F2. The scheduler 221 outputs the determined information to the DL data processor 222a, the DL data processor 222b, the control information generator 223, and the UL data processor 224. In the present embodiment, a response signal for the ultra-low delay data D1 with strict latency requirement is arranged in the second frequency band F2. For this reason, the scheduler 221 assigns the resource different from the resource assigned to the response signal for the data D1 to the data D2, in the resource of the second frequency band F2.

The DL data processor 222a performs OFDM modulation on the data D1 to D3 output from the transmission data processor 220 and the control information output from the control information generator 223, for each type of data on the basis of the MCS and the like output from the scheduler 221. The DL data processor 222a filters and synthesizes the OFDM-modulated transmission signals for each type of data, to generate an F-OFDM signal. Thereafter, the DL data processor 222a outputs the generated F-OFDM signal to the wireless unit 240a in the transmission period of the downlink signal notified from the scheduler 221.

The DL data processor 222b performs OFDM modulation on the data D2 output from the transmission data processor 220, for each type of data on the basis of the MCS and the like output from the scheduler 221. Thereafter, the DL data processor 222b outputs the OFDM-modulated signal to the wireless unit 240b at the transmission timing included in the resource notified from the scheduler 221. The DL data processor 222b is an example of the third generator. The transmission signal generated with the DL data processor 222b corresponds to the transmission signal included in the F-OFDM signal generated with the DL data processor 222a.

The wireless unit 240b converts the transmission signal output from the DL data processor 222b from the digital signal to the analog signal, and up-converts the converted transmission signal to the frequency of the second frequency band F2. The wireless unit 240b performs processing, such as quadrature modulation and amplification, on the up-converted transmission signal. Thereafter, the wireless unit 240b transmits the processed transmission signal in a wireless manner to the space through the antenna 25.

### [Terminals 30]

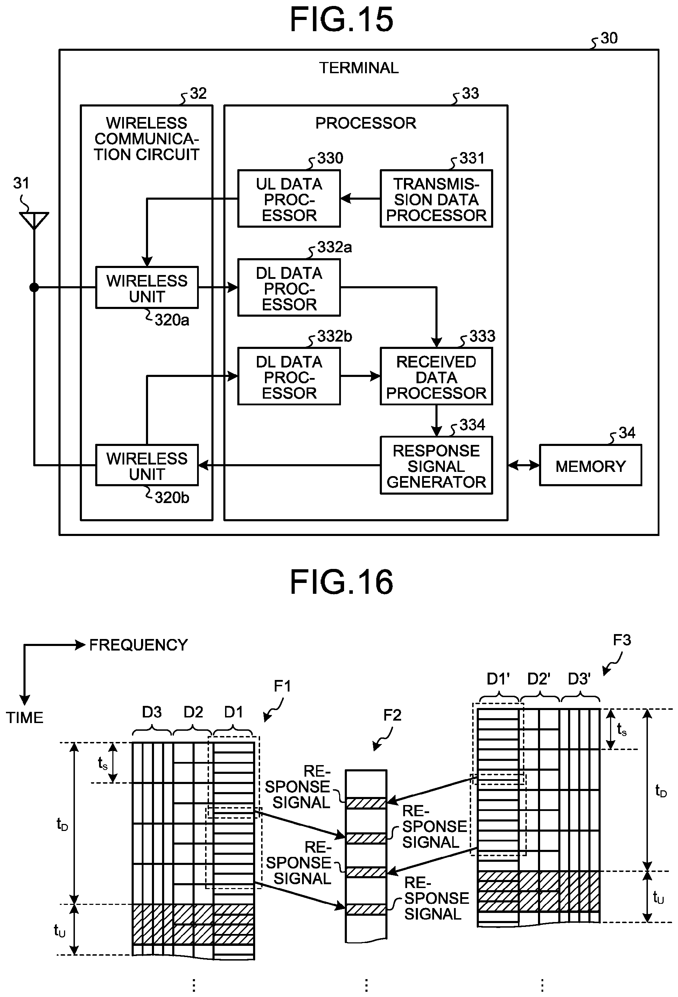

FIG. 15 is a block diagram illustrating an example of each of the terminals 30 in the third embodiment. As illustrated in FIG. 15, each of the terminals 30 includes the UL data processor 330, the transmission data processor 331, a DL data processor 332a, a DL data processor 332b, the received data processor 333, and the response signal generator 334. In FIG. 15, except for the points described hereinafter, the blocks with the same reference numerals as those in FIG. 5 are equal to the blocks explained with reference to FIG. 5, and a detailed explanation thereof is omitted.

The DL data processor 332a filters the F-OFDM signal serving as the downlink signal output from the wireless unit 320a for each type of data, in the transmission period of the downlink signal. Thereafter, the DL data processor 332a demodulates the filtered data for each of the types of data, and outputs the demodulated data to the received data processor 333. The demodulated data includes control information including information indicating the resource of the response signal and the transmission timing and the like. In the present embodiment, the DL data processor 332a demodulates the data including the data D1 to D3.

The DL data processor 332b demodulates the transmission signal output from the wireless unit 320b, in the period in which the transmission signal is transmitted in the second frequency band F2. The DL data processor 332b outputs the demodulated data to the received data processor 333. In the present embodiment, the DL data processor 332b demodulates the data including the data D2 from the transmission signal output from the wireless unit 320b.

### [Effects of Third Embodiment]

As described above, the base station 20 according to the present embodiment further includes the DL data processor 222b generating a transmission signal corresponding to one of the transmission signals included in the F-OFDM signal generated with the DL data processor 222a. The wireless unit 240b transmits the transmission signal generated with the DL data processor 222b to the terminal 30 in the second frequency band F2 at a timing different from the timing to which the response signal is assigned. This structure enables the wireless communication system 10 to transmit broadband data, such as the data D2, with higher efficiency.

### (Fourth Embodiment)

In the wireless communication system 10 according to the first embodiment, an F-OFDM signal including a plurality of transmission signals is transmitted in the first frequency band F1, and a response signal corresponding to at least one of the transmission signals transmitted in the first frequency band F1 is transmitted in the second frequency band F2. By contrast, in the wireless communication system 10 according to the fourth embodiment, an F-OFDM signal including a plurality of transmission signals are transmitted in the first frequency band F1 and a third frequency band F3 from the base station 20 to the terminals 30. In addition, a response signal corresponding to at least one of the transmission signals transmitted in the first frequency band F1 and a response signal corresponding to at least one of the transmission signals transmitted in the third frequency band F3 are transmitted in the second frequency band F2. The downlink signal may be transmitted using three or more frequency bands, and a response signal corresponding to at least part of transmission signals in the signals transmitted in the respective frequency bands may be transmitted in the second frequency band F2.

FIG. 16 is a diagram illustrating an example of the structure of symbols included in a signal transmitted and received between the base station 20 and the terminals 30 in the fourth embodiment. In the present embodiment, for example, as illustrated in FIG. 16, an F-OFDM signal including data D1 to D3 is transmitted in the first frequency band F1, and an F-OFDM signal including data D1' to D3' is transmitted in the third frequency band F3. In addition, a response signal corresponding to the data D1 in the data D1 to D3 transmitted in the first frequency band F1 and a response signal corresponding to the data D1' in the data D1' to D3' transmitted in the third frequency band F3 are transmitted in the second frequency band F2. As described above, the resource of one frequency band is shared as the resource of response signals for F-OFDM signals transmitted at different frequency bands to enable use of the frequency band used for transmission of the response signal with higher efficiency.

### [Base Station 20]

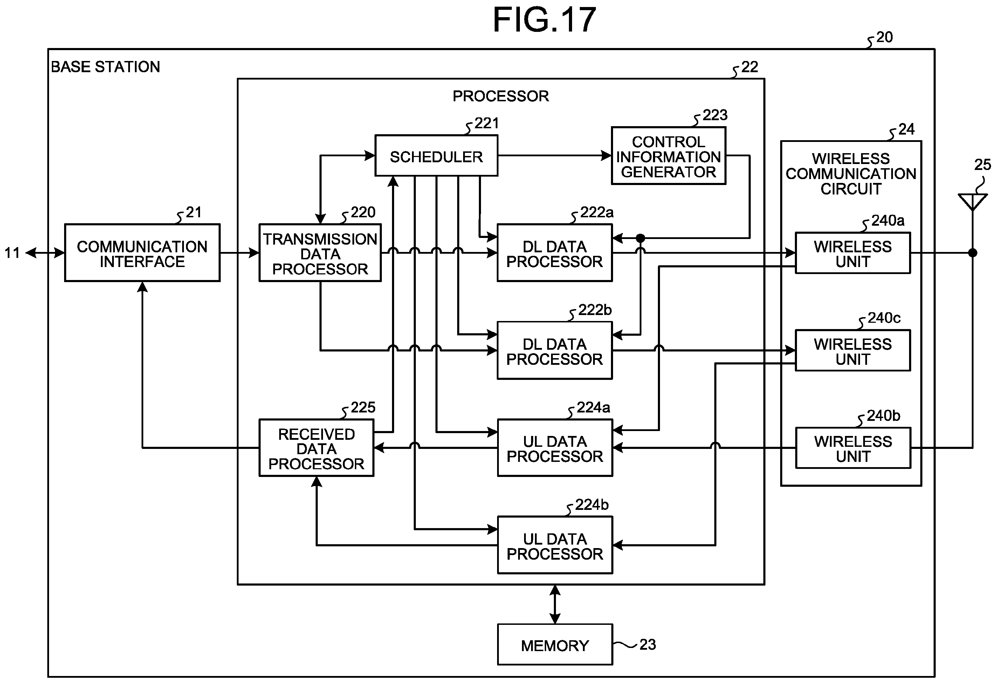

FIG. 17 is a block diagram illustrating an example of the base station 20 according to the fourth embodiment. The base station 20 according to the present embodiment includes the transmission data processor 220, the scheduler 221, the DL data processor 222a, the DL data processor 222b, the control information generator 223, a UL data processor 224a, a UL data processor 224b, and the received data processor 225. In the present embodiment, the wireless communication circuit 24 includes wireless units 240a to 240c. In FIG. 17, except for the points described hereinafter, the blocks with the same reference numerals as those in FIG. 2 are equal to the blocks explained with reference to FIG. 2, and a detailed explanation thereof is omitted.

The wireless unit 240c converts the downlink signal output from the DL data processor 222b from the digital signal to an analog signal, and up-converts the converted downlink signal to the frequency of the third frequency band F3. Thereafter, the wireless unit 240c performs processing, such as quadrature modulation and amplification, on the up-converted downlink signal. Thereafter, the wireless unit 240c transmits the processed downlink signal to the space through the antenna 25 in the downlink signal transmission period. In addition, the wireless unit 240c performs processing, such as amplification, quadrature demodulation, and down-conversion, on the uplink signal received in the uplink signal transmission period through the antenna 25, in the third frequency band F3. Thereafter, the wireless unit 240c outputs the processed uplink signal to the UL data processor 224b.

The scheduler 221 determines information to be used for generation of the downlink signal, for each type of data buffered with the transmission data processor 220. The information to be used for generation of the downlink signal includes information of the frequency resource used for transmission of the downlink signal. In the present embodiment, for example, the scheduler 221 assigns the resource of the data D1 to D3 to the first frequency band F1, and assigns the resource of the data D1' to D3' to the third frequency band F3. The scheduler 221 outputs the determined information to the DL data processor 222a, the DL data processor 222b, the control information generator 223, the UL data processor 224a, and the UL data processor 224b.

The control information generator 223 generates control information including information, such as the resource of the response signal and MCS, determined for each of types of data with the scheduler 221. For example, the control information generator 223 generates control information including information to assign the resource of the data D1 to D3 to the first frequency F1 and assign the resource of the data D1' to D3' to the third frequency band F3. In addition, for example, the control information generator 223 generates control information including information to assign the resource of response signals corresponding to the data D2 and the data D2' to the second frequency band F2. The control information generator 223 outputs the generated control information to the DL data processor 222a and the DL data processor 222b. The information to assign the resource of the response signal corresponding to the data D2 to the second frequency band F2 is an example of the first designation signal, and the information to assign the resource of the response signal corresponding to the data D2' to the second frequency band F2 is an example of the second designation signal.

The DL data processor 222a performs OFDM modulation on the data D1 to D3 output from the transmission data processor 220 and the control information output from the control information generator 223, for each type of data, on the basis of MCS and the like output from the scheduler 221. Thereafter, the DL data processor 222a filters and synthesizes the OFDM-modulated transmission signals for each of types of data, to generate an F-OFDM signal. Thereafter, the DL data processor 222a outputs the generated F-OFDM signal to the wireless unit 240a in the transmission period of the downlink signal notified from the scheduler 221.

The DL data processor 222b performs OFDM modulation on the data D1' to D3' output from the transmission data processor 220 and the control information output from the control information generator 223, for each type of data, on the basis of MCS and the like output from the scheduler 221. Thereafter, the DL data processor 222b filters and synthesizes the OFDM-modulated transmission signals for each of types of data, to generate an F-OFDM signal. Thereafter, the DL data processor 222b outputs the generated F-OFDM signal to the wireless unit 240c in the transmission period of the downlink signal notified from the scheduler 221. The DL data processor 222b is an example of the fourth generator.

The UL data processor 224a demodulates the uplink signal output from the wireless unit 240a, in the transmission period of the uplink signal notified from the scheduler 221. The uplink signal output from the wireless unit 240a may include a response signal. The UL data processor 224a outputs the demodulated data to the received data processor 225 for each of types of data. The UL data processor 224a also demodulates a response signal output from the wireless unit 240b in the predetermined period including the transmission timing of the response signal on the basis of the resource of the response signal notified from the scheduler 221. The UL data processor 224a outputs the demodulated response signal to the received data processor 225.

The UL data processor 224b demodulates the uplink signal output from the wireless unit 240c, in the transmission period of the uplink signal notified from the scheduler 221. The uplink signal output from the wireless unit 240c may include a response signal. The UL data processor 224a outputs the demodulated data to the received data processor 225 for each of types of data.

The terminals 30 have the same structure as that of the terminals 30 in the first embodiment explained with reference to FIG. 5, and a detailed explanation thereof is omitted. The present embodiment illustrates the example in which the base station 20 transmits an F-OFDM signal including data D1 to D3 in the first frequency band F1, and transmits an F-OFDM signal including data D1' to D3' in the third frequency band F3. However, the disclosed technique is not limited thereto. For example, the base station 20 transmitting an F-OFDM signal including data D1 to D3 in the first frequency band F1 may be a base station 20 different from the base station 20 transmitting an F-OFDM signal including data D1' to D3' in the third frequency band F3.

### [Effects of Fourth Embodiment]

As described above, the base station 20 according to the present embodiment further includes the DL data processor 222b generating an F-OFDM signal. The control information generator 223 further generates control information to designate the second frequency band F2 as the frequency band in which a response signal for at least one of a plurality of transmission signals included in the F-OFDM signal generated with the DL data processor 222b. The wireless unit 240c transmits the F-OFDM signal generated with the DL data processor 222b to the terminals 30 in the third frequency band F3 different from the first frequency band F1 and the second frequency band F2. The wireless unit 240b receives a response signal corresponding to at least one of the transmission signals included in the F-OFDM signal generated with the DL data processor 222b in the second frequency band F2. This structure enables more efficient use of the second frequency band F2 used for transmission of the response signal.

### (Fifth Embodiment)

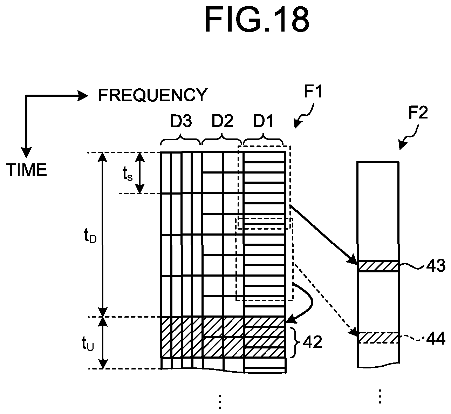

In the first embodiment, the resource of the response signal corresponding to at least one of the transmission signals included in the F-OFDM signal transmitted in the first frequency band F1 is fixedly assigned to the second frequency band F2. By contrast, in the fifth embodiment, for example, as illustrated in FIG. 18, the resource of the response signal is assigned to the second frequency band F2, when a transmission timing 43 of the response signal assigned to the second frequency band F2 is earlier than a transmission timing 42 of the uplink signal. By contrast, when a transmission timing 44 of the response signal assigned to the second frequency band F2 is later than the transmission timing 42 of the uplink signal within the range of the transmission timing of the response signal, the resource of the response signal is assigned to the uplink signal of the first frequency band F1. The range of the transmission timing of the response signal is calculated in advance in consideration of the processing time of the terminals 30 and the like.

### [Base Station 20]

Except for the points described hereinafter, the structure of the base station 20 according to the present embodiment is equal to the base station 20 of the first embodiment explained with reference to FIG. 2, and a detailed explanation thereof is omitted.

The scheduler 221 determines the priority of data, for each type of data buffered with the transmission data processor 220. In addition, the scheduler 221 determines which of the first frequency band F1 and the second frequency band F2 the resource used for transmission of a response signal indicating Ack or Nack is assigned to, for each of the data, in the order of the determined priority of the data.

Specifically, the scheduler 221 temporarily assigns the resource of the response signal to the second frequency band F2 for each of groups of the data D1 having the highest priority. The scheduler 221 compares the transmission timing of the response signal with the transmission timing of the uplink signal within the range of the transmission timing of the response signal, for each of the groups of the data D1. For example, the range of the transmission timing of the response signal is calculated on the basis of the signal transmission time between the base station 20 and the terminals 30 and the processing time in the terminals 30 and the like. The information indicating the range of the transmission timing of the response signal is set in the scheduler 221 in advance.

The scheduler 221 fixes the temporal assignment of the resource to the second frequency band F2, with respect to the response signal for which the temporarily assigned transmission timing is earlier than the transmission timing of the uplink signal. By contrast, with respect to the response signal for which the temporarily assigned transmission timing is the same as the transmission timing of the uplink signal or later than the transmission timing of the uplink signal, the scheduler 221 cancels the assignment of the resource of the response signal to the second frequency band F2. Thereafter, the scheduler 221 assigns the resource of the canceled response signal to the uplink signal of the first frequency band F1. Thereafter, the scheduler 221 outputs information of the resource of the response signal determined for each type of data to the control information generator 223 and the UL data processor 224.

The control information generator 223 generates control information including information, such as the resource of the response signal and MCS, determined for each of the types of the data with the scheduler 221. Thereafter, the control information generator 223 outputs the generated control information to the DL data processor 222.

For example, as illustrated in the second embodiment or the third embodiment described above, there are cases where the resource of the signal other than the response signal is assigned to the second frequency band F2. In addition, as illustrated in the fourth embodiment described above, there are cases where the resource of the response signal of the other data is assigned to the second frequency band F2. For this reason, when the resource of the response signal is temporarily assigned to the second frequency band F2, the resource of the response signal is not always assigned to the resource of the earliest timing within the range of the transmission timing of the response signal. For this reason, there are cases where the transmission timing temporarily assigned to the response signal in the second frequency band F2 within the range of the transmission timing of the response signal is later than the transmission timing of the uplink signal in the first frequency band F1. In such a case, assigning the resource of the response signal to the uplink signal in the first frequency band F1 brings forward the transmission timing of the response signal. This structure further reduces the delay quantity of the response signal.

In addition, in the present embodiment, when the transmission timing temporarily assigned to the response signal in the second frequency band F2 is the same as the transmission timing of the uplink signal in the first frequency band F1, the scheduler 221 assigns the resource of the response signal to the uplink signal in the first frequency band F1. This structure brings the signal transmitted from the terminals 30 to the base station 20 to the uplink signal of the first frequency band F1 together. This structure reduces the power consumption of the base station 20 and the terminals 30 in comparison with the case of transmitting and receiving the signal using both the first frequency band F1 and the second frequency band F2.

In the present embodiment, the response signal the resource of which is assigned to the second frequency band F2 is a response signal for the data D1 with the highest priority. However, the response signal the resource of which is assigned to the second frequency band F2 may be response signals corresponding to respective two or more pieces of data with higher priorities.

### [Terminals 30]

The structure of each of the terminals 30 in the present embodiment is the same as that of the terminals 30 in the first embodiment explained with reference to FIG. 5. For this reason, a detailed explanation of the structure is omitted.

### [Operations of Base Station 20]

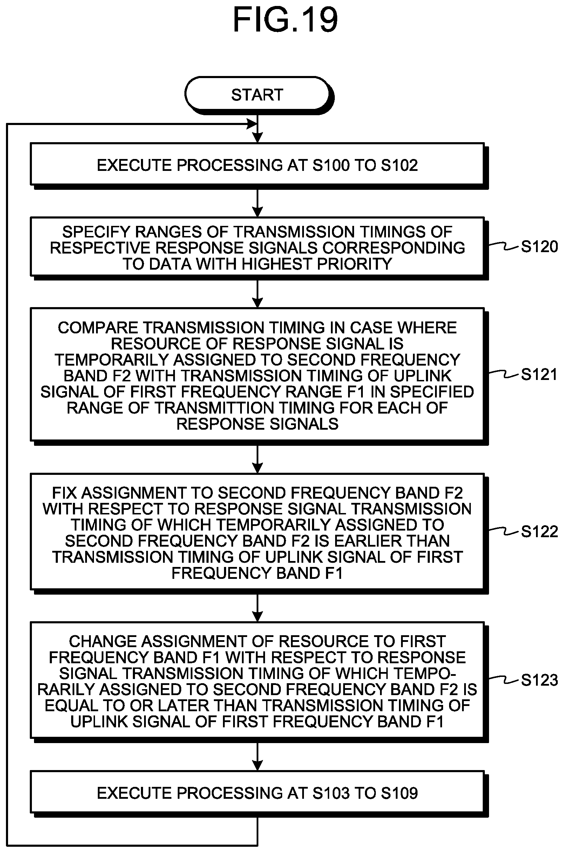

FIG. 19 is a flowchart illustrating an example of operations of the base station 20 according to the fifth embodiment. Except for the points described hereinafter, the processing with the same reference numerals with those in FIG. 6 is equal to the processing explained with reference to FIG. 6, and a detailed explanation thereof is omitted.

First, the processing illustrated at Steps S100 and S101 is executed. Thereafter, the scheduler 221 assigns the resource of the response signal for each type of data, with respect to the data excluding the data with the highest priority, in the order of priority, highest first (S102). In the present embodiment, the scheduler 221 assigns the resource of the response signal to the first frequency band F1 for the data (for example, the data D2 and the data D3) excluding the data (for example, the ultra-low delay data D1) with the highest priority, in the order of priority, highest first.

Thereafter, the scheduler 221 specifies the range of the transmission timing of each of response signals corresponding to the data (for example, the ultra-low delay data D1) with the highest priority (S120). Thereafter, the scheduler 221 compares the transmission timing in the case where the resource of the response signal is temporarily assigned to the second frequency band F2 with the transmission timing of the uplink signal of the first frequency band F1, in the range of the transmission timing specified at Step S120, for each of the response signals corresponding to the data with the highest priority (S121).

Thereafter, the scheduler 221 fixes the assignment of the resource to the second frequency band F2, with respect to the response signal for which the transmission timing in the case where the resource of the response signal is temporarily assigned to the second frequency band F2 is earlier than the transmission timing of the uplink signal of the first frequency band F1 (S122). The scheduler 221 changes the assignment of the resource to the first frequency band F1, with respect to the response signal for which the transmission timing in the case where the resource of the response signal is temporarily assigned to the second frequency band F2 is the same as or later than the transmission timing of the uplink signal of the first frequency band F1 (S123). Thereafter, the processing illustrated at Steps S103 to S109 is executed.

### [Effects of Fifth Embodiment]

As described above, the control information generator 223 according to the present embodiment generates control information to designate the first frequency band F1 as the frequency band in which the response signal is transmitted, when the transmission timing of the response signal assigned to the second frequency band F2 is later than the timing at which the uplink signal is transmitted from the terminal 30 in the first frequency band F1 after a group of data is transmitted, with respect to the response signal transmitted from the terminal 30 for the group of data transmitted in at least one of a plurality of transmission signals included in an F-OFDM signal. This structure further reduces the delay quantity of the response signal.

### (Others)

The disclosed technique is not limited to the embodiments described above, and various modifications are possible within the range of the gist thereof.

For example, in each of the embodiments described above, a response signal for any one of a plurality of transmission signals included in an F-OFDM signal transmitted from the base station 20 to the terminals 30 in the first frequency band F1 is transmitted from the terminals 30 to the base station 20 in the second frequency band F2. However, the disclosed technique is not limited thereto. For example, a response signal for any one of a plurality of transmission signals included in an F-OFDM signal transmitted from the base station 20 to the terminals 30 in the first frequency band F1 may be transmitted from the base station 20 to the terminals 30 in the second frequency band F2. In addition, the structure is not limited to the base station 20 and the terminals 30, and the disclosed technique may be applied to two wireless communication devices communicating with each other. Specifically, a response signal for any one of a plurality of transmission signals included in an F-OFDM signal transmitted from one wireless communication device to the other communication device in the first frequency band F1 may be transmitted from the other wireless communication device to one wireless communication device in the second frequency band F2.

In addition, in the embodiments described above, each of the DL data processor 222, the DL data processor 222a, and the DL data processor 222b generates an F-OFDM signal including a plurality of transmission signals having different symbol lengths, as the wireless signal, but the disclosed technique is not limited thereto. The wireless signal may be a wireless signal generated by a multiplexing method other than the F-OFDM signal, as long as it is a signal generated by multiplexing a plurality of transmission signals assigned to respective pieces of wireless resource with different time lengths. Specifically, the symbol length is not always different between the multiplexed transmission signals. The pieces of wireless resource with different time lengths are pieces of wireless resource with different time lengths in the wireless signals, and pieces of wireless resource with different time lengths of a group of data to which the response signal is sent as a reply. For example, when the symbol lengths are the same, the wireless resource with a short time length (for example, a small number of symbols) is assigned to the ultra-low delay data D1 with the scheduler 221. In addition, the wireless resource with a time length (a more number of symbols) longer than that of the wireless resource assigned to the ultra-low delay data D1 is assigned to the data D2 used for broadband communication with the scheduler 221. In this case, when a response signal for the ultra-low delay data D1 is transmitted by TDD in the same frequency band, switching between DL and UL occurs, and the overhead accompanying the switching may deteriorate the frequency use efficiency. This causes decrease in communication capacity, in the case of broadband communication. By contrast, in each of the embodiments described above, the response signal for the ultra-low delay data D1 is transmitted using the second frequency band F2 different from the first frequency band F1 used for downlink signals. This structure improves the transmission efficiency while satisfying the latency requirement in the ultra-low delay data D1.

In addition, in each of the embodiments described above, the processing blocks included in the base station 20 and the terminals 30 are divided according to functions in accordance with the main processing details to facilitate understanding of the base station 20 and the terminals 30 in each of the embodiment. For this reason, the disclosed technique is not limited to the method for dividing the processing blocks or the names of the blocks. In addition, the processing blocks included in the base station 20 and the terminals 30 in each of the embodiments described above may be subdivided into more processing blocks in accordance with the processing details, or a plurality of processing blocks may be integrated into one processing block. The processing executed with each of the processing blocks may be achieved with processing by software, or achieved with dedicated hardware, such as an application specific integrated circuit (ASIC).

### Reference Signs List

10 wireless communication system
11 core network
20 base station
21 communication interface
22 processor
220 transmission data processor
221 scheduler
222 DL data processor
223 control information generator
224 UL data processor
225 received data processor
23 memory
24 wireless communication circuit
240a, 240b, 240c wireless unit
25 antenna
30 terminal
31 antenna
32 wireless communication circuit
320a, 320b wireless unit
33 processor
330 UL data processor
331 transmission data processor
332 DL data processor
333 received data processor
334 response signal generator
34 memory
40 transmission timing
42 transmission timing
43 transmission timing
44 transmission timing

## Claims

1. A base station (20) configured to switch between an uplink period and a downlink period in a time-division manner in a first frequency band, the base station (20) comprising:
a transmitter (240a) configured to transmit a signal obtained by multiplexing a first signal and a second signal in the downlink period in the first frequency band, and configured to transmit a designation signal in the first frequency band, the designation signal including information indicating a transmission timing of a response signal for either the first signal or the second signal; and
a receiver (240a, 240b) configured to receive an uplink signal in the uplink period in the first frequency band and receive the response signal for either the first signal or the second signal at the transmission timing indicated in the information included in the designation signal in a second frequency band different from the first frequency band, wherein
a symbol length of the first signal is the same as a symbol length of the second signal, and
a number of symbols of the first signal is different from a number of symbols of the second signal.

2. The base station (20) of claim 1, wherein
the response signal indicates either Acknowledgement, ACK, or Negative Acknowledgement, NACK.

3. The base station (20) of claim 1, wherein
the response signal includes Acknowledgement, or Negative Acknowledgement, NACK, indicating whether the signal in the downlink period is correctly received.

4. The base station of claim **1,** further comprising:
a generator (223) configured to generate the designation signal designating the second frequency band as a frequency band in which the response signal is transmitted.

5. The base station (20) of claim 1, wherein the second frequency band is used for only uplink.

6. A terminal (30) configured to switch between an uplink period and a downlink period in a time-division manner in a first frequency band, the terminal comprising:
a receiver (320a) configured to receive a signal obtained by multiplexing a first signal and a second signal in the downlink period among the uplink period and the downlink period in the first frequency band, and configured to receive a designation signal in the first frequency band, the designation signal including information indicating a transmission timing of a response signal for either the first signal or the second signal; and
a transmitter (320b) configured to transmit an uplink signal in the uplink period in the first frequency band and transmit the response signal for either the first signal or the second signal at the transmission timing indicated in the information included in the designation signal in a second frequency band different from the first frequency band, wherein
a symbol length of the first signal is the same as a symbol length of the second signal, and
a number of symbols of the first signal is different from a number of symbols of the second signal.

7. The terminal (30) of claim 6, wherein the response signal indicates either Acknowledgement, ACK, or Negative Acknowledgement, NACK.

8. The terminal (30) of claim 6, wherein
the response signal in the uplink period in the second frequency band includes Acknowledgement, ACK, or Negative Acknowledgement, NACK, indicating whether the signal in the downlink period is correctly received.

9. The terminal (30) of claim 6, wherein
the receiver (320a) is configured to receive the designation signal designating the second frequency band as a frequency band in which the response signal is transmitted.

10. The terminal (30) of claim 6, wherein the second frequency band is used for only uplink.

11. A wireless communication method for a base station (20) comprising:
switching between an uplink period and a downlink period in a time-division manner in a first frequency band;
transmitting a signal obtained by multiplexing a first signal and a second signal in the downlink period in the first frequency band, and transmitting a designation signal in the first frequency band, the designation signal including information indicating a transmission timing of a response signal for either the first signal or the second signal; and
receiving an uplink signal in the uplink period in the first frequency band and receiving the response signal for either the first signal or the second signal at the transmission timing indicated in the information included in the designation signal in a second frequency band different from the first frequency band, wherein
a symbol length of the first signal is the same as a symbol length of the second signal, and
a number of symbols of the first signal is different from a number of symbols of the second signal.

12. A wireless communication method for a terminal (30) comprising:
switching between an uplink period and a downlink period in a time-division manner in a first frequency band;
receiving a signal obtained by multiplexing a first signal and a second signal in the downlink period in the time-division manner among the uplink period and the downlink period in the first frequency band, and receiving a designation signal in the first frequency band, the designation signal including information indicating a transmission timing of a response signal for either the first signal or the second signal; and
transmitting an uplink signal in the uplink period in the first frequency band, in response to receiving the multiplexed signal, and transmitting the response signal for either the first signal or the second signal at the transmission timing indicated in the information included in the designation signal in a second frequency band different from the first frequency band, wherein
a symbol length of the first signal is the same as a symbol length of the second signal, and
a number of symbols of the first signal is different from a number of symbols of the second signal.

## Patentansprüche

1. Basisstation (20), die dazu konfiguriert ist, auf eine Zeitteilungsweise in einem ersten Frequenzband zwischen einer Uplink-Periode und einer Downlink-Periode umzuschalten, wobei die Basisstation (20) Folgendes umfasst:
einen Sender (240a), der dazu konfiguriert ist, ein Signal zu senden, das durch Multiplexen eines ersten Signals und eines zweiten Signals in der Downlink-Periode in dem ersten Frequenzband erhalten wird, und dazu konfiguriert ist, ein Bezeichnungssignal in dem ersten Frequenzband zu senden, wobei das Bezeichnungssignal Informationen beinhaltet, die einen Sendezeitpunkt eines Antwortsignals entweder für das erste Signal oder das zweite Signal angeben; und
einen Empfänger (240a, 240b), der dazu konfiguriert ist, ein Uplink-Signal in der Uplink-Periode in dem ersten Frequenzband zu empfangen und das Antwortsignal entweder für das erste Signal oder das zweite Signal zu dem Sendezeitpunkt zu empfangen, der in den Informationen angegeben ist, die in dem Bezeichnungssignal in einem zweiten Frequenzband beinhaltet sind, das von dem ersten Frequenzband verschieden ist, wobei
eine Symbollänge des ersten Signals die gleiche wie eine Symbollänge des zweiten Signals ist und
eine Anzahl von Symbolen des ersten Signals von einer Anzahl von Symbolen des zweiten Signals verschieden ist.

2. Basisstation (20) nach Anspruch 1, wobei
das Antwortsignal entweder eine Bestätigung, ACK, oder eine negative Bestätigung, NACK, angibt.

3. Basisstation (20) nach Anspruch 1, wobei
das Antwortsignal eine Bestätigung, ACK, oder eine negative Bestätigung, NACK, beinhaltet, die angibt, ob das Signal in der Downlink-Periode korrekt empfangen wird.

4. Basisstation nach Anspruch 1, ferner umfassend:
einen Generator (223), der dazu konfiguriert ist, das Bezeichnungssignal zu erzeugen, das das zweite Frequenzband als ein Frequenzband bezeichnet, in dem das Antwortsignal gesendet wird.

5. Basisstation (20) nach Anspruch 1, wobei das zweite Frequenzband nur für den Uplink verwendet wird.

6. Endgerät (30), das dazu konfiguriert ist, auf eine Zeitteilungsweise in einem ersten Frequenzband zwischen einer Uplink-Periode und einer Downlink-Periode umzuschalten, wobei das Endgerät Folgendes umfasst:
einen Empfänger (320a), der dazu konfiguriert ist, ein Signal zu empfangen, das durch Multiplexen eines ersten Signals und eines zweiten Signals in der Downlink-Periode unter der Uplink-Periode und der Downlink-Periode in dem ersten Frequenzband erhalten wird, und dazu konfiguriert ist, ein Bezeichnungssignal in dem ersten Frequenzband zu empfangen, wobei das Bezeichnungssignal Informationen beinhaltet, die einen Sendezeitpunkt eines Antwortsignals entweder für das erste Signal oder das zweite Signal angeben; und
einen Sender (320b), der dazu konfiguriert ist, ein Uplink-Signal in der Uplink-Periode in dem ersten Frequenzband zu senden und das Antwortsignal entweder für das erste Signal oder das zweite Signal zu dem Sendezeitpunkt zu senden, der in den Informationen angegeben ist, die in dem Bezeichnungssignal in einem zweiten Frequenzband beinhaltet sind, das von dem ersten Frequenzband verschieden ist, wobei
eine Symbollänge des ersten Signals die gleiche wie eine Symbollänge des zweiten Signals ist und
eine Anzahl von Symbolen des ersten Signals von einer Anzahl von Symbolen des zweiten Signals verschieden ist.

7. Endgerät (30) nach Anspruch 6, wobei
das Antwortsignal entweder eine Bestätigung, ACK, oder eine negative Bestätigung, NACK, angibt.

8. Endgerät (30) nach Anspruch 6, wobei
das Antwortsignal in der Uplink-Periode in dem zweiten Frequenzband eine Bestätigung, ACK, oder eine negative Bestätigung, NACK, beinhaltet, die angibt, ob das Signal in der Downlink-Periode korrekt empfangen wird.

9. Endgerät (30) nach Anspruch 6, wobei
der Empfänger (320a) dazu konfiguriert ist, das Bezeichnungssignal zu empfangen, das das zweite Frequenzband als ein Frequenzband bezeichnet, in dem das Antwortsignal gesendet wird.

10. Endgerät (30) nach Anspruch 6, wobei das zweite Frequenzband nur für den Uplink verwendet wird.

11. Drahtloskommunikationsverfahren für eine Basisstation (20), umfassend:
Umschalten zwischen einer Uplink-Periode und einer Downlink-Periode auf eine Zeitteilungsweise in einem ersten Frequenzband; Senden eines Signals, das durch Multiplexen eines ersten Signals und eines zweiten Signals in der Downlink-Periode in dem ersten Frequenzband erhalten wird, und Senden eines Bezeichnungssignals in dem ersten Frequenzband, wobei das Bezeichnungssignal Informationen beinhaltet, die einen Sendezeitpunkt eines Antwortsignals entweder für das erste Signal oder das zweite Signal angeben; und
Empfangen eines Uplink-Signals in der Uplink-Periode in dem ersten Frequenzband und Empfangen des Antwortsignals entweder für das erste Signal oder das zweite Signal zu dem Sendezeitpunkt, der in den Informationen angegeben ist, die in dem Bezeichnungssignal in einem zweiten Frequenzband beinhaltet sind, das von dem ersten Frequenzband verschieden ist, wobei
eine Symbollänge des ersten Signals die gleiche wie eine Symbollänge des zweiten Signals ist und
eine Anzahl von Symbolen des ersten Signals von einer Anzahl von Symbolen des zweiten Signals verschieden ist.

12. Drahtloskommunikationsverfahren für ein Endgerät (30), umfassend:
Umschalten zwischen einer Uplink-Periode und einer Downlink-Periode auf eine Zeitteilungsweise in einem ersten Frequenzband; Empfangen eines Signals, das durch Multiplexen eines ersten Signals und eines zweiten Signals in der Downlink-Periode unter der Uplink-Periode und der Downlink-Periode auf die Zeitteilungsweise in dem ersten Frequenzband erhalten wird, und Empfangen eines Bezeichnungssignals in dem ersten Frequenzband, wobei das Bezeichnungssignal Informationen beinhaltet, die einen Sendezeitpunkt eines Antwortsignals entweder für das erste Signal oder das zweite Signal angeben; und
Senden eines Uplink-Signals in der Uplink-Periode in dem ersten Frequenzband als Reaktion auf ein Empfangen des gemultiplexten Signals und Senden des Antwortsignals entweder für das erste Signal oder das zweite Signal zu dem Sendezeitpunkt, der in den Informationen angegeben ist, die in dem Bezeichnungssignal in einem zweiten Frequenzband beinhaltet sind, das von dem ersten Frequenzband verschieden ist, wobei
eine Symbollänge des ersten Signals die gleiche wie eine Symbollänge des zweiten Signals ist und
eine Anzahl von Symbolen des ersten Signals von einer Anzahl von Symbolen des zweiten Signals verschieden ist.

## Revendications

1. Station de base (20) configurée pour commuter entre une période de liaison montante et une période de liaison descendante par répartition dans le temps dans une première bande de fréquences, la station de base (20) comprenant :
un émetteur (240a) configuré pour transmettre un signal obtenu par multiplexage d'un premier signal et d'un second signal pendant la période de liaison descendante dans la première bande de fréquences, et configuré pour transmettre un signal de désignation dans la première bande de fréquences, le signal de désignation comportant des informations indiquant une synchronisation de transmission d'un signal de réponse pour le premier signal ou le second signal ; et
un récepteur (240a, 240b) configuré pour recevoir un signal de liaison montante pendant la période de liaison montante dans la première bande de fréquences et pour recevoir le signal de réponse pour le premier signal ou le second signal à la synchronisation de transmission indiquée dans les informations incluses dans le signal de désignation dans une seconde bande de fréquences différente de la première bande de fréquences,
dans laquelle
une longueur de symbole du premier signal est la même qu'une longueur de symbole du second signal, et
un nombre de symboles du premier signal est différent d'un nombre de symboles du second signal.

2. Station de base (20) selon la revendication 1, dans laquelle le signal de réponse indique soit un accusé de réception, ACK, soit un accusé de réception négatif, NACK.

3. Station de base (20) selon la revendication 1, dans laquelle le signal de réponse comporte un accusé de réception, ACK, ou un accusé de réception négatif, NACK, indiquant si le signal pendant la période de liaison descendante est correctement reçu.

4. Station de base selon la revendication 1, comprenant en outre :
un générateur (223) configuré pour générer le signal de désignation désignant la seconde bande de fréquences comme une bande de fréquences dans laquelle le signal de réponse est transmis.

5. Station de base (20) selon la revendication 1, dans laquelle la seconde bande de fréquence est utilisée uniquement pour la liaison montante.

6. Terminal (30) configuré pour commuter entre une période de liaison montante et une période de liaison descendante par répartition dans le temps dans une première bande de fréquences, le terminal comprenant :
un émetteur (320a) configuré pour recevoir un signal obtenu par multiplexage d'un premier signal et d'un second signal pendant la période de liaison descendante de la période de liaison montante et la période de liaison descendante dans la première bande de fréquences, et configuré pour recevoir un signal de désignation dans la première bande de fréquences, le signal de désignation comportant des informations indiquant une synchronisation de transmission d'un signal de réponse pour le premier signal ou le second signal ; et
un émetteur (320b) configuré pour transmettre un signal de liaison montante pendant la période de liaison montante dans la première bande de fréquences et transmettre le signal de réponse pour le premier signal ou le second signal à la synchronisation de transmission indiquée dans les informations incluses dans le signal de désignation dans une seconde bande de fréquences différente de la première bande de fréquences, dans lequel
une longueur de symbole du premier signal est la même qu'une longueur de symbole du second signal, et
un nombre de symboles du premier signal est différent d'un nombre de symboles du second signal.

7. Terminal (30) selon la revendication 6, dans lequel
le signal de réponse indique soit un accusé de réception, ACK, soit un accusé de réception négatif, NACK.

8. Terminal (30) selon la revendication 6, dans lequel
le signal de réponse pendant la période de liaison montante dans la seconde bande de fréquences comporte un accusé de réception, ACK, ou un accusé de réception négatif, NACK, indiquant si le signal pendant la période de liaison descendante est correctement reçu.

9. Terminal (30) selon la revendication 6, dans lequel
le récepteur (320a) est configuré pour recevoir le signal de désignation désignant la seconde bande de fréquences comme une bande de fréquences dans laquelle le signal de réponse est transmis.

10. Terminal (30) selon la revendication 6, dans lequel la seconde bande de fréquences est utilisée uniquement pour la liaison montante.

11. Procédé de communication sans fil pour une station de base (20) comprenant :
la commutation entre une période de liaison montante et une période de liaison descendante par répartition dans le temps dans une première bande de fréquences ;
la transmission d'un signal obtenu par multiplexage d'un premier signal et d'un second signal pendant la période de liaison descendante dans la première bande de fréquences, et la transmission d'un signal de désignation dans la première bande de fréquences, le signal de désignation comportant des informations indiquant une synchronisation de transmission d'un signal de réponse pour le premier signal ou le second signal ; et
la réception d'un signal de liaison montante pendant la période de liaison montante dans la première bande de fréquences et la réception du signal de réponse pour le premier signal ou le second signal à la synchronisation de transmission indiquée dans les informations incluses dans le signal de désignation dans une seconde bande de fréquences différente de la première bande de fréquences, dans lequel
une longueur de symbole du premier signal est la même qu'une longueur de symbole du second signal, et
un nombre de symboles du premier signal est différent d'un nombre de symboles du second signal.

12. Procédé de communication sans fil pour un terminal (30) comprenant :
la commutation entre une période de liaison montante et une période de liaison descendante par répartition dans le temps dans une première bande de fréquences ;
la réception d'un signal obtenu par multiplexage d'un premier signal et d'un second signal pendant la période de liaison descendante par répartition dans le temps de la période de liaison montante et la période de liaison descendante dans la première bande de fréquences, et la réception d'un signal de désignation dans la première bande de fréquences, le signal de désignation comportant des informations indiquant une synchronisation de transmission d'un signal de réponse pour le premier signal ou le second signal ; et
la transmission d'un signal de liaison montante pendant la période de liaison montante dans la première bande de fréquences, en réponse à la réception du signal de multiplexage, et la transmission du signal de réponse pour le premier signal ou le second signal à la synchronisation de transmission indiquée dans les informations incluses dans le signal de désignation dans une seconde bande de fréquences différente de la première bande de fréquences, dans lequel
une longueur de symbole du premier signal est la même qu'une longueur de symbole du second signal, et
un nombre de symboles du premier signal est différent d'un nombre de symboles du second signal.
